(19) Europäisches Patentamt
European Patent Office
Office européen des brevets

(11) **EP 3 708 381 B1**

(12) # EUROPEAN PATENT SPECIFICATION


(45) Date of publication and mention of the grant of the patent:
**08.06.2022 Bulletin 2022/23**

(21) Application number: **19878040.5**

(22) Date of filing: **08.10.2019**

(51) International Patent Classification (IPC):
***B41M 5/42*** (2006.01) ***B41J 2/475*** (2006.01)
***B41M 5/28*** (2006.01) ***B41M 5/44*** (2006.01)
***B41M 5/46*** (2006.01) ***G11B 7/0045*** (2006.01)
***G11B 7/245*** (2006.01) ***G11B 7/246*** (2013.01)
***G11B 7/2542*** (2013.01) ***G11B 7/2572*** (2013.01)
***B41M 5/30*** (2006.01) *B41M 5/327* (2006.01)
*B41M 5/333* (2006.01) *B41M 5/34* (2006.01)
*B41M 3/14* (2006.01)

(52) Cooperative Patent Classification (CPC):
**B41M 5/30; B41J 2/4753; B41M 5/42; G11B 7/246;**
B41M 3/142; B41M 5/305; B41M 5/3275;
B41M 5/3335; B41M 5/34; B41M 2205/04;
B41M 2205/40

(86) International application number:
**PCT/JP2019/039568**

(87) International publication number:
**WO 2020/090369 (07.05.2020 Gazette 2020/19)**


(54) **DRAWING METHOD AND ERASING METHOD**

ZEICHENVERFAHREN UND LÖSCHVERFAHREN

PROCÉDÉ DE DESSIN ET PROCÉDÉ D'EFFACEMENT


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2018 JP 2018204199**

(43) Date of publication of application:
**16.09.2020 Bulletin 2020/38**



(73) Proprietor: **Sony Group Corporation**
**Minato-ku, Tokyo 108-0075 (JP)**

(72) Inventors:
- **KURIHARA, Kenichi**
  **Tokyo 108-0075 (JP)**
- **TAKEUCHI, Taichi**
  **Tokyo 108-0075 (JP)**
- **HOSHI, Mitsunari**
  **Atsugi-shi, Kanagawa 243-0014 (JP)**
- **HIRAI, Nobukazu**
  **Tokyo 108-0075 (JP)**

(74) Representative: **D Young & Co LLP**
**120 Holborn**
**London EC1N 2DY (GB)**



(56) References cited:
**EP-A1- 3 037 274**
**JP-A- H0 817 067**
**JP-A- H10 505 188**
**JP-A- 2003 308 630**
**JP-A- 2004 188 827**
**JP-A- 2006 228 278**
**JP-A- 2006 228 354**
**JP-A- 2006 318 645**
**JP-A- 2007 026 568**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 3 708 381 B1

## Description

### Technical Field

The present disclosure relates to a drawing method and an erasing method that are performed on, for example, a thermal recording medium having an uneven shape in a surface.

### Background Art

In recent years, due to growing customer needs for customization, development of a thermal recording technique that performs drawing using a laser has been promoted as one of what is called non-contact type on-demand decorating techniques. Unlike a contact-type recording method using a thermal head, for example, the thermal recording technique using a laser allows noncontact recording, thus making it possible to perform writing (drawing) of information without a thermal recording layer included in an outermost surface.

As a drawing apparatus that performs drawing using a laser, for example, PTL1 discloses a recording apparatus that includes a laser-beam oscillator, a scanner, a modulator, and a lens system. The laser-beam oscillator irradiates, with a plurality of laser beams each having a different wavelength, a reversible multicolor recording medium that includes a plurality of reversible thermal color-developing compositions each having a different color development tone. The scanner performs scanning on a surface of the reversible multicolor recording medium with a laser beam. The modulator selectively modulates an output of the laser beam in association with a scanning position and recording information. The lens system causes the plurality of laser beams each having a different wavelength to enter a light deflector from a different direction.

### Citation List

### Patent Literature

PTL 1: Japanese Unexamined Patent Application Publication No. 2004-188827 The document EP3037274A1 discloses a drawing method used when performing drawing on a thermal recording medium that includes, above a recording layer, a light-transmitting member having an uneven shape (lens array) in a plane, the drawing method comprising: irradiating the thermal recording medium with a laser beam via the uneven shape (lens array). Summary of the Invention

Meanwhile, in a thermal recording medium used for decoration, a surface decoration member provided on a thermal recording layer does not necessarily have a uniform thickness. For example, a case where the surface decoration member has a geometrical cross-sectional shape is assumed. In such a case, a refraction of a laser beam or variation in beam diameter, etc. occur at a surface of the surface decoration member, which is likely to cause a distortion of a drawn image or drawing unevenness, and result in a deterioration in display quality. Deterioration in display quality when used for decoration is to cause a significant damage to a product value.

Therefore, it is desirable to provide a drawing method and an erasing method that make it possible to improve display quality.

In a drawing method according to an embodiment of the present disclosure, when performing drawing on a thermal recording medium that includes, above a recording layer, a light-transmitting member having an uneven shape in a plane, an optical compensator having one surface and another surface is provided on the light-transmitting member to cause the one surface and the light-transmitting member to face each other, and the thermal recording medium is irradiated with a laser beam via the optical compensator. The one surface of the optical compensator has a shape that fits the uneven shape of the light-transmitting member, and the other surface is flat and opposed to the one surface.

In an erasing method according to an embodiment of the present disclosure, when erasing an image from a thermal recording medium that includes, above a recording layer, a light-transmitting member having an uneven shape in a plane, an optical compensator having one surface and another surface is provided on the light-transmitting member to cause the one surface and the light-transmitting member to face each other, and the thermal recording medium is irradiated with a laser beam via the optical compensator. The one surface of the optical compensator has a shape that fits the uneven shape of the light-transmitting member, and the other surface is flat and opposed to the one surface.

In the drawing method and the erasing method according to the embodiment of the present disclosure, the optical compensator having the one surface and the other surface is provided on the light-transmitting member to cause the one surface and the light-transmitting member to face each other, and a laser beam is emitted via the optical compensator. The one surface of the optical compensator has a shape that fits the uneven shape of the light-transmitting member, and the other surface is flat and opposed to the one surface. This allows the emitted laser beam to reach the recording layer without being refracted.

Brief Description of the Drawings

[FIG. 1] FIG. 1 is a cross-sectional schematic diagram that illustrates a drawing method and an erasing method that are performed on a thermal recording medium according to a first embodiment of the present disclosure.

[FIG. 2] FIG. 2 illustrates an example of a procedure in which the thermal recording medium according to the first embodiment of the present disclosure is irradiated with a laser beam.

[FIG. 3] FIG. 3 is a cross-sectional schematic diagram that illustrates an example of a configuration of the thermal recording medium illustrated in FIG. 1.

[FIG. 4] FIG. 4 illustrates an example of a system configuration of a drawing and erasing apparatus.

[FIG. 5] FIG. 5 describes a refraction of a laser beam at an uneven surface.

[FIG. 6] FIG. 6 is a characteristic diagram that illustrates a relationship between a thickness of a surface decoration member and an axis deviation amount of a laser beam.

[FIG. 7] FIG. 7 illustrates a drawing position when irradiating, with a laser beam, a general thermal recording medium that includes, in a surface, a surface decoration member having a flat surface.

[FIG. 8] FIG. 8 is a schematic diagram of a microlens array.

[FIG. 9] FIG. 9 illustrates a drawing position when irradiating, with a laser beam, a thermal recording medium that includes, in a surface, a surface decoration member having an unevenness in a surface.

[FIG. 10] FIG. 10 illustrates a spot position in a case of irradiating, with a beam, a glass substrate having a flat surface.

[FIG. 11] FIG. 11 is a perspective view (A) and cross-sectional schematic diagram (B) that illustrates a configuration of a microlens.

[FIG. 12] FIG. 12 illustrates a spot position in a case of irradiating, with a beam, the microlens illustrated in FIG. 11.

[FIG. 13] FIG. 13 is a cross-sectional schematic diagram that illustrates a drawing method and an erasing method that are performed on a thermal recording medium according to a second embodiment of the present disclosure.

[FIG. 14] FIG. 14 is a cross-sectional schematic diagram that illustrates an example of a configuration of a thermal recording medium according to a modification example of the present disclosure.

[FIG. 15] FIG. 15 is a perspective view that illustrates an example of an appearance of Application Example 1.

[FIG. 16A] FIG. 16A is a perspective view that illustrates an example of an appearance (front surface side) of Application Example 2.

[FIG. 16B] FIG. 16B is a perspective view that illustrates an example of an appearance (rear surface side) of Application Example 2.

[FIG. 17A] FIG. 17A is a perspective view that illustrates an example of an appearance (upper surface) of Application Example 3.

[FIG. 17B] FIG. 17B is a perspective view that illustrates an example of an appearance (side surface) of Application Example 3.

[FIG. 18] FIG. 18 is a perspective view that illustrates an example of Application Example 4.

[FIG. 19] FIG. 19 is a schematic diagram that illustrates an example of a configuration of Application Example 5.

[FIG. 20] FIG. 20 is a cross-sectional diagram that describes a shape of an optical correction jig used in Experimental Example.

Modes for Carrying Out the Invention

In the following, embodiments of the present disclosure are described in detail with reference to drawings. The following description is a specific example of the present disclosure, and the present disclosure is not limited to the following embodiments. In addition, the present disclosure is not limited to a position, size, and proportion, etc. of each component illustrated in each drawing, either. It is to be noted that the description is given in the following order.

1. First Embodiment (an example of a drawing method and an erasing method in which an optical compensator is disposed on a light-transmitting member and a laser beam is emitted through the optical compensator)

    1-1. Configuration of Thermal Recording Medium

    1-2. Manufacturing Method of Thermal Recording Medium

    1-3. Configuration of Drawing and Erasing Apparatus

    1-4. Drawing Method and Erasing Method

    1-5. Workings and Effects

2. Second Embodiment (an example of a drawing method and an erasing method in which a thermal recording medium is immersed in a solvent and irradiated with a laser beam through the solvent)

3. Modification Example (an example of a thermal recording medium that includes a recording layer with a surface having a curvature)

4. Application Examples

5. Examples

< 1. First Embodiment>

FIG. 1 illustrates a drawing method and an erasing method that are performed on a thermal recording medium (thermal recording medium 100) according to a first embodiment of the present disclosure. FIG. 2 illustrates an example of a procedure in which the thermal recording medium 100 according to the first embodiment of the present disclosure is irradiated with a laser beam. The thermal recording medium 100 is a reversible recording medium that allows reversible recording and erasing of information by heat. For example, in the thermal recording medium 100, a light-transmitting member 113 having an uneven shape in a plane is provided on a recording layer 112 that is provided on a support substrate 111 and able to reversibly vary a recording state and an erasing state.

In the drawing method and the erasing method according to the present embodiment, an optical compensator 200 having one surface (surface 200S2) and another surface (surface 200S1) is provided on the light-transmitting member 113 in the thermal recording medium 100 to cause the surface 200S2 and the light-transmitting member 113 to face each other, and a laser beam L is emitted via the optical compensator 200. The one surface (surface 200S2) of the optical compensator 200 has a shape that fits the uneven shape of the light-transmitting member 113, and the other surface (surface 200S1) is flat and opposed to the surface 200S2. Thus, drawing on the recording layer 112 or erasing of an image drawn on the recording layer 112 are performed.

First, the thermal recording medium 100, and a drawing and erasing apparatus 1 are described in order, and subsequently the drawing method and the erasing method performed on the thermal recording medium 100 are described in detail.

(1-1. Configuration of Thermal Recording Medium)

FIG. 3 illustrates a cross-sectional configuration of a thermal recording medium 100A that is a specific example of the thermal recording medium 100 illustrated in FIG. 1. It is to be noted that the thermal recording medium 100A illustrated in FIG. 3 schematically illustrates a cross-sectional configuration, and has a size and shape different from an

actual size and shape in some cases. For example, the thermal recording medium 100A includes, on the support substrate 111, the recording layer 112 that is able to reversibly vary the recording state and the erasing state. For example, this recording layer 112 has a configuration in which three layers having color development tones different from each other (recording layer 112M, recording layer 112C, and recording layer 112Y) are stacked in this order. Between the recording layer 112M and the recording layer 112C, and between the recording layer 112C and the recording layer 112Y, heat insulating layers 114 and 115 each including a plurality of layers (here, three layers) are provided, respectively. On the recording layer 112Y, the light-transmitting member 113 is provided.

The support substrate 111 is provided to support the recording layer 112. The support substrate 111 includes a material having high heat resistance and high dimensional stability in a planar direction. The support substrate 111 may have either light transmissivity or non-light transmissivity. For example, the support substrate 111 may be a substrate having a rigidity such as a wafer, or may include a thin-layer glass, film, paper, or the like having flexibility. Using a flexible substrate as the support substrate 111 makes it possible to achieve a flexible (bendable) reversible recording medium.

Examples of a composition material of the support substrate 111 include an inorganic material, a metal material, a polymeric material such as plastic, and the like. Specifically, examples of the inorganic material include silicon (Si), silicon oxide ($SiO_x$), silicon nitride ($SiN_x$), aluminum oxide ($AlO_x$), magnesium oxide ($MgO_x$), and the like. Silicon oxide includes glass, spin-on glass (SOG), or the like. Examples of the metal material include metal alone such as aluminum (Al), copper (Cu), silver (Ag), gold (Au), platinum (Pt), palladium (Pd), nickel (Ni), tin (Sn), cobalt (Co), rhodium (Rh), iridium (Ir), iron (Fe), ruthenium (Ru), osmium (Os), manganese (Mn), molybdenum (Mo), tungsten (W), niobium (Nb), tantalum (Ta), titanium (Ti), bismuth (Bi), antimony (Sb), and lead (Pb) or an alloy that includes two or more of these. Specific examples of the alloy include stainless steel (SUS), an aluminum alloy, a magnesium alloy, and a titanium alloy. The polymeric material includes phenolic resin, epoxy resin, melamine resin, urea resin, unsaturated polyester resin, alkyd resin, urethane resin, polyimide, polyethylene, high density polyethylene, medium density polyethylene, low density polyethylene, polypropylene, polyvinyl chloride (PVC), polyvinylidene chloride, polystyrene, polyvinyl acetate, polyurethane, acrylonitrile butadiene-styrene resin (ABS), acrylic resin (PMMA), polyamide, nylon, polyacetal, polycarbonate (PC), modified polyphenylene ether, polyethylene telephthalate (PET), polybutylene terephthalate, cyclic polyolefin, polyphenylene sulfide, polytetrafluoroethylene (PTFE), polysulphone, polyethersulfone, amorphous polyarylate, liquid crystal polymer, polyetheretherketone (PEEK), polyamide imide, polyethylene naphthalate (PEN), triacetyl cellulose, cellulose, or a copolymer of these, glass fiber reinforced plastic, carbon-fiber reinforced plastic (CFRP), or the like.

It is to be noted that it is preferable to provide a reflection layer (not illustrated) in an upper surface or a lower surface of the support substrate 11. Providing the reflection layer makes it possible to achieve more vivid color display.

The recording layer 112 allows reversible writing and erasing of information by heat, and is configured using a material that allows stable repeated recording and control of a decoloring state and a color-developing state. The recording layer 112 includes, for example, the recording layer 112M that is to turn magenta (M), the recording layer 112C that is to turn cyan (C), and the recording layer 112Y that is to turn yellow (Y).

In the recording layer 112, for example, the recording layers 112M, 112C, and 112Y each include a polymeric material. The polymeric material includes a coloring compound (reversible thermal color-developing composition) that is to develop a color different from each another, a developer or developing/reducing agent corresponding to each coloring compound, and a photothermal converting agent that absorbs a light ray of a wavelength range different from each other to generate heat. This allows the thermal recording medium 100A to perform coloring as multicolor display. Specifically, for example, the recording layer 112M includes a coloring compound that is to turn magenta, a developing/reducing agent corresponding thereto, and for example, a photothermal converting agent that absorbs infrared light having an emission wavelength $\lambda 1$ to generate heat. For example, the recording layer 112C includes a coloring compound that is to turn cyan, a developing/reducing agent corresponding thereto, and for example, a photothermal converting agent that absorbs and develops infrared light having an emission wavelength $\lambda 2$. For example, the recording layer 112Y includes a coloring compound that is to turn yellow, and a developing/reducing agent corresponding thereto, and for example, a photothermal converting agent that absorbs infrared light having an emission wavelength $\lambda 3$ to generate heat. The emission wavelengths $\lambda 1$, $\lambda 2$, and $\lambda 3$ are different from each other, thereby making it possible to obtain a display medium that allows multicolor display.

It is to be noted that the recording layers 112M, 112C, and 112Y become transparent in the decoloring state. This allows the thermal recording medium 100A to perform recording in a wide color gamut. It is preferable that the recording layers 112M, 112C, and 112Y each have a thickness in a stacking direction (hereinafter, simply referred to as the thickness) of not less than 1 $\mu$m and not more than 20 $\mu$m, for example. More preferably, for example, the thickness is not less than 2 $\mu$m and not more than 15 $\mu$m. One reason for this is that if the recording layers 112M, 112C, and 112Y have a thickness of less than 1 $\mu$m, there is a possibility of not being able to obtain a sufficient color optical density. In addition, in a case where each of layers 22, 23, and 24 has a thickness larger than 20 $\mu$m, an amount of heat used by the recording layers 112M, 112C, and 112Y increases, which is likely to result in a deterioration in color-developing or decoloring performance.

For example, the coloring compound includes a leuco dye. The leuco dye includes, for example, an existing dye for thermal paper. Specifically, as an example, there is a compound that includes, in a molecule, a group having an electron-donating property, for example, as represented by Formula (1) below.

[Chem. 1]

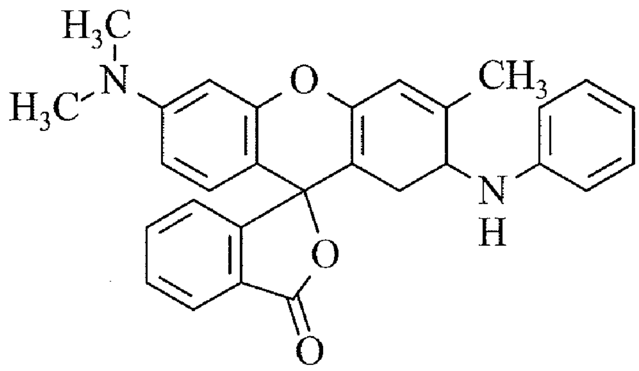

..... (1)

The coloring compound used in each recording layer 112M, 112C, and 112Y is not particularly limitative, and is selectable as appropriate in accordance with a purpose. Examples of a specific coloring compound other than the compound represented by Formula (1) above include a fluoran-based compound, a triphenylmethanephthalide-based compound, an azaphthalide-based compound, a phenothiazine-based compound, a leuco auramine-based compound, an indorinophthalide-based compound, and the like. Other than this, examples of the coloring compound include 2-anilino-3-methyl-6-diethylaminofluoran, 2-anilino-3-methyl-6-di(n-butylamino) fluoran, 2-anilino-3-methyl-6-(N-n-propyl-N-methylamino) fluoran, 2-anilino-3-methyl-6-(N-isopropyl-N-methylamino) fluoran, 2-anilino-3-methyl-6-(N-isobutyl-N-methylamino) fluoran, 2-anilino-3-methyl-6-(N-n-amyl-N-methylamino) fluoran, 2-anilino-3-methyl-6-(N-sec-butyl-N-methylamino) fluoran, 2-anilino-3-methyl-6-(N-n-amyl-N-ethylamino) fluoran, 2-anilino-3-methyl-6-(N-iso-amyl-N-ethylamino) fluoran, 2-anilino-3-methyl-6-(N-n-propyl-N-isopropylamino) fluoran, 2-anilino-3-methyl-6-(N-cyclohexyl-N-methylamino) fluoran, 2-anilino-3-methyl-6-(N-ethyl-p-toluidino) fluoran, 2-anilino-3-methyl-6-(N-methyl-p-toluidino) fluoran, 2-(m-trichloromethylanilino)-3-methyl-6-diethylaminofluoran, 2-(m-trifluoromethylanilino)-3-methyl-6-diethylaminofluoran, 2-(m-trichloromethylanilino)-3-methyl-6-(N-cyclohexyl-N-methylamino) fluoran, 2-(2,4-dimethylanilino)-3-methyl-6-diethylaminofluoran, 2-(N-ethyl-p-toluidino)-3-methyl-6-(N-ethylanilino) fluoran, 2-(N-ethyl-p-toluidino)-3-methyl-6-(N-propyl-p-toluidino) fluoran, 2-anilino-6-(N-n-hexyl-N-ethylamino) fluoran, 2-(o-chloroanilino)-6-diethylaminofluoran, 2-(o-chloroanilino)-6-dibutylaminofluoran, 2-(m-trifluoromethylanilino)-6-diethylaminofluoran, 2,3-dimethyl-6-dimethylaminofluoran, 3-methyl-6-(N-ethyl-p-toluidino) fluoran, 2-chloro-6-diethylaminofluoran, 2-bromo-6-diethylaminofluoran, 2-chloro-6-dipropylaminofluoran, 3-chloro-6-cyclohexylaminofluoran, 3-bromo-6-cyclohexylaminofluoran, 2-chloro-6-(N-ethyl-N-isoamylamino) fluoran, 2-chloro-3-methyl-6-diethylaminofluoran, 2-anilino-3-chloro-6-diethylaminofluoran, 2-(o-chloroanilino)-3-chloro-6-cyclohexylaminofluoran, 2-(m-trifluoromethylanilino)-3-chloro-6-diethylaminofluoran, 2-(2,3-dichloroanilino)-3-chloro-6-diethylaminofluoran, 1,2-benzo-6-diethylaminofluoran, 3-diethylamino-6-(m-trifluoromethylanilino) fluoran, 3-(1-ethyl-2-methylindole-3-yl)-3-(2-ethoxy-4-diethylaminophenyl)-4-azaphthalide, 3-(1-ethyl-2-methylindole-3-yl)-3-(2-ethoxy-4-diethylaminophenyl)-7-azaphthalide, 3-(1-octyl-2-methylindole-3-yl)-3-(2-ethoxy-4-diethylaminophenyl)-4-azaphthalide, 3-(1-ethyl-2-methylindole-3-yl)-3-(2-methyl-4-diethylaminophenyl)-4-azaphthalide, 3-(1-ethyl-2-methylindole-3-yl)-3-(2-methyl-4-diethylaminophenyl)-7-azaphthalide, 3-(1-ethyl-2-methylindole-3-yl)-3-(4-diethylaminophenyl)-4-azaphthalide, 3-(1-ethyl-2-methylindole-3-yl)-3-(4-N-n-amyl-N-methylaminophenyl)-4-azaphthalide, 3-(1-methyl-2-methylindole-3-yl)-3-(2-hexyloxy-4-diethylaminophenyl)-4-azaphthalide, 3,3-bis(2-ethoxy-4-diethylaminophenyl)-4-azaphthalide, 3,3-bis(2-ethoxy-4-diethylaminophenyl)-7-azaphthalide, 2-(p-acetylanilino)-6-(N-n-amyl-N-n-butylamino) fluoran, 2-benzylamino-6-(N-ethyl-p-toluidino) fluoran, 2-benzylamino-6-(N-methyl-2,4-dimethylanilino) fluoran, 2-benzylamino-6-(N-ethyl-2,4-dimethylanilino) fluoran, 2-benzylamino-6-(N-methyl-p-toluidino) fluoran, 2-benzylamino-6-(N-ethyl-p-toluidino) fluoran, 2-(di-p-methylbenzylamino)-6-(N-ethyl-p-toluidino) fluoran, 2-($\alpha$-phenylethylamino)-6-(N-ethyl-p-toluidino) fluoran, 2-methylamino-6-(N-methylanilino) fluoran, 2-methylamino-6-(N-ethylanilino) fluoran, 2-methylamino-6-(N-propylanilino) fluoran, 2-ethylamino-6-(N-methyl-p-toluidino) fluoran, 2-methylamino-6-(N-methyl-2,4-dimethylanilino) fluoran, 2-ethylamino-6-(N-ethyl-2,4-dimethylanilino) fluoran, 2-dimethylamino-6-(N-methylanilino) fluoran, 2-dimethylamino-6-(N-ethylanilino) fluoran, 2-diethylamino-6-(N-methyl-p-toluidino) fluoran, 2-diethylamino-6-(N-ethyl-p-toluidino) fluoran, 2-dipropylamino-6-(N-methylanilino) fluoran, 2-dipropylamino-6-(N-ethylanilino) fluoran, 2-amino-6-(N-methylanilino) fluoran, 2-amino-6-(N-ethylanilino) fluoran, 2-amino-6-(N-propylanilino) fluoran, 2-amino-6-(N-methyl-p-toluidino) fluoran, 2-amino-6-(N-ethyl-p-toluidino) fluoran, 2-amino-6-(N-propyl-p-toluidino) fluoran, 2-amino-6-(N-methyl-p-ethylanilino) fluoran, 2-amino-6-(N-ethyl-p-ethylanilino) fluoran, 2-amino-6-(N-propyl-p-ethylanilino) fluoran, 2-amino-6-(N-methyl-2,4-dimethylanilino) fluoran, 2-amino-6-(N-ethyl-2,4-dimethylanilino) fluoran, 2-amino-6-(N-propyl-2,4-dimethylanilino) fluoran, 2-amino-6-(N-methyl-p-chloroanilino) fluoran, 2-amino-6-(N-ethyl-p-chloroanilino) fluoran, 2-amino-6-(N-propyl-p-chloroanilino) fluoran, 1,2-benzo-6-(N-ethyl-N-isoamylamino) fluoran, 1,2-benzo-6-dibutylaminofluoran, 1,2-benzo-6-(N-methyl-N-cyclohexylamino) fluoran, 1,2-benzo-6-(N-ethyl-N-toluidino) fluoran, and the like. For each of the recording layers 112M, 112C, and 112Y, one of the above-described coloring compounds may be used alone, or two or more types may be used in combination.

The developing/reducing agent is to develop a color of an achromatic coloring compound or decolor a coloring compound having a predetermined color, for example. Examples of the developing/reducing agent include a phenol derivative, a salicylic acid derivative, a urea derivative, and the like. Specifically, for example, the developing/reducing agent includes a compound that has a salicylic acid skeleton represented by general Formula (2) below and includes, in a molecule, a group having an electron-accepting property.

[Chem. 2]

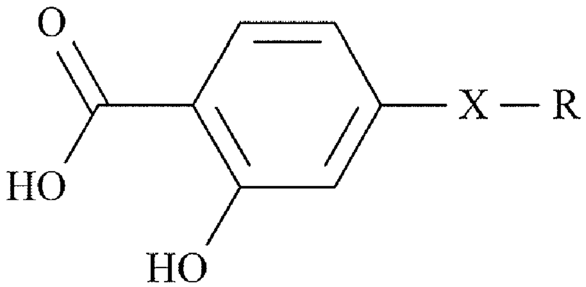

..... (2)

(X represents any one of -NHCO-, -CONH-, -NHCONH-, -CONHCO-, -NHNHCO-, -CONHNH-, -CONHNHCO-, -NHCOCONH-, -NHCONHCO-, -CONHCONH-, -NHNHCONH-, -NHCONHNH-, -CONHNHCONH-, -NHCONHNHCO-, and -CONHNHCONH-. R represents a straight-chain hydrocarbon group having a carbon number of not less than 25 and not more than 34.)

Other than this, examples of the developing/reducing agent include 4,4'-isopropylidenebisphenol, 4,4'-isopropylidenebis(o-methylphenol), 4,4'-secondary butylidene bisphenol, 4,4'-isopropylidenebis(2-tertiary butylphenol), p-nitrobenzoic acid zinc, 1,3,5-tris(4-tert-butyl-3-hydroxy-2,6-dimethylbenzyl) isocyanuric acid, 2,2-(3,4'-dihydroxydiphenyl) propane, bis(4-hydroxy-3-methylphenyl) sulfide, 4-{β-(p-methoxyphenoxy)ethoxy] salicylic acid, 1,7-bis(4-hydroxyphenylthio)-3,5-dioxaheptane, 1,5-bis(4-hydroxyphenylthio)-5-oxapentane, monobenzyl phthalate ester monocalcium salt, 4,4'-cyclohexylidenediphenol, 4,4'-isopropylidenebis(2-chlorophenol), 2,2'-methylenebis(4-methyl-6-tert-butylphenol), 4,4'-butylidenebis(6-tert-butyl-2-methyl) phenol, 1,1,3-tris(2-methyl-4-hydroxy-5-tert-butylphenyl) butane, 1,1,3-tris(2-methyl-4-hydroxy-5-cyclohexyl phenyl) butane, 4,4'-thiobis(6-tert-butyl-2-methyl) phenol, 4,4'-diphenol sulfone, 4-isopropoxy-4'-hydroxydiphenylsulfone (4-hydroxy-4'-isopropoxydiphenylsulfone), 4-benzyloxy-4'-hydroxydiphenyl sulfone, 4,4'-diphenol sulfoxide, isopropyl p-hydroxybenzoate, benzyl p-hydroxybenzoate, benzyl protocatechuate, stearyl gallate, lauryl gallate, octyl gallate, 1,3-bis(4-hydroxyphenylthio)-propane, N,N'-diphenylthiourea, N,N'-di(m-chlorophenyl)thiourea, salicylanilide, bis(4-hydroxyphenyl) acetic acid methyl ester, bis(4-hydroxyphenyl) acetic acid benzyl ester, 1,3-bis(4-hydroxycumyl) benzene, 1,4-bis(4-hydroxycumyl) benzene, 2,4'-diphenol sulfone, 2,2'-diallyl-4,4'-diphenol sulfone, 3,4-dihydroxyphenyl-4'-methyldiphenyl sulfone, zinc 1-acetyloxy-2-naphthoate, zinc 2-acetyloxy-1-naphthoate, zinc 2-acetyloxy-3-naphthoate, α,α-bis(4-hydroxyphenyl)-α-methyltoluene, antipyrine complex of zinc thiocyanate, tetrabromobisphenol A, tetrabromobisphenol S, 4,4'-thiobis(2-methylphenol), 4,4'-thiobis(2-chlorophenol), dodecylphosphonic acid, tetradecylphosphonic acid, hexadecylphosphonic acid, octadecylphosphonic acid, eicosylphosphonic acid, docosylphosphonic acid, tetracosylphosphonic acid, hexacosylphosphonic acid, octacosylphosphonic acid, α-hydroxydodecylphosphonic acid, α-hydroxytetradecylphosphonic acid, α-hydroxyhexadecylphosphonic acid, α-hydroxyoctadecylphosphonic acid, α-hydroxyeicosylphosphonic acid, α-hydroxydocosylphosphonic acid, α-hydroxytetracosylphosphonic acid, dihexadecyl phosphate, dioctadecyl phosphate, dieicosyl phosphate, didocosyl phosphate, monohexadecyl phosphate, monooctadecyl phosphate, monoeicosyl phosphate, monodocosyl phosphate, methyl hexadecyl phosphate, methyl octadecyl phosphate, methyl eicosyl phosphate, methyl docosyl phosphate, amyl hexadecyl phosphate, octyl hexadecyl phosphate, lauryl hexadecyl phosphate, and the like. For each of the recording layers 112M, 112C, and 112Y, one of the above-described developing/reducing agents may be used alone or two or more types may be used in combination.

The photothermal converting agent is a substance that absorbs light of a predetermined wavelength range of, for example, a near infrared region, to generate heat. As the photothermal converting agent, for example, it is preferable to use a near-infrared absorbent dye having an absorption peak within a range of a wavelength of not less than 700 nm and not more than 2000 nm and having little absorption in a visible region. Specifically, examples of the photothermal converting agent include a compound having a cyanine skeleton (cyanine-based dye), a compound having a phthalocyanine skeleton (phthalocyanine-based dye), a compound having a naphthalocyanine skeleton (naphthalocyanine-based dye), a compound having a squarylium skeleton (squarylium-based dye), a metal complex such as a dithio complex, diimonium salt, aminium salt, an inorganic compound, and the like. The inorganic compound includes, for example, graphite, carbon black, metal powder particles, metal oxide such as tricobalt tetroxide, iron oxide, chromium oxide, copper oxide, titanium black, or ITO, metal nitride such as niobium nitride, metal carbide such as tantalum carbide, metal sulfide, various types of magnetic powders, or the like.

It is preferable that the polymeric material be a substance in which the coloring compound, the developing/reducing agent, and the photothermal converting agent tend to disperse homogenously. Examples of the polymeric material include a thermosetting resin and a thermoplastic resin. Specifically, examples of the polymeric material include polyvinyl chloride, polyvinyl acetate, vinyl chloride-vinyl acetate copolymer, ethyl cellulose, polystyrene, styrene-based copolymer, phenoxy resin, polyester, aromatic polyester, polyurethane, polycarbonate, polyacrylic acid ester, polymethacrylic acid ester, acrylic acid copolymer, maleic acid polymer, cycloolefin copolymer, polyvinyl alcohol, modified polyvinyl alcohol, polyvinyl butyral, polyvinyl phenol, polyvinyl pyrrolidone, hydroxyethyl cellulose, carboxymethyl cellulose, starch, phenolic resin, epoxy resin, melamine resin, urea resin, unsaturated polyester resin, alkyd resin, urethane resin, polyarylate resin, polyimide, polyamide, polyamide-imide, and the like. The above-described polymeric materials may be crosslinked in use.

The recording layers 112M, 112C, and 112Y each include at least one type for each of the coloring compound, the developing/reducing agent, and the photothermal converting agent described above. In addition, for example, the recording layers 112M, 112C, and 112Y may each have a two-layer structure that includes a layer including the coloring compound and the developing/reducing agent and a layer including the photothermal converting agent. The recording layers 112M, 112C, and 112Y may each include, for example, various additives such as a sensitizer or an ultraviolet absorber other than the material described above.

The heat insulating layers 114 and 115 are provided to suppress, between the recording layer 112M and the recording layer 112C and between the recording layer 112C and the recording layer 112Y, respectively, dispersion of contained molecules or heat transfer at the time of drawing. The heat insulating layers 114 and 115 each include, for example, a general polymeric material having a light transmissivity. Examples of a specific material include polyvinyl chloride, polyvinyl acetate, vinyl chloride-vinyl acetate copolymer, ethyl cellulose, polystyrene, styrene copolymer, phenoxy resin, polyester, aromatic polyester, polyurethane, polycarbonate, polyacrylic acid ester, polymethacrylic acid ester, acrylic acid copolymer, maleic acid polymer, polyvinyl alcohol, modified polyvinyl alcohol, hydroxyethyl cellulose, carboxymethyl cellulose, starch, and the like. It is to be noted that the heat insulating layers 114 and 115 may each include, for example, various additives such as an ultraviolet absorber. In addition, for example, the heat insulating layers 114 and 115 may each have a stacked structure including a plurality of layers with a view to, for example, improving adhesion with each of the recording layers 112M, 112C, and 112Y.

In addition, the heat insulating layers 114 and 115 may each include an inorganic material having light transmissivity. For example, use of porous silica, alumina, titania, carbon, or a complex of these, or the like reduces thermal conductivity, achieving a high heat insulation effect, and therefore is preferable. It is possible to form the heat insulating layers 114 and 115 using a sol-gel method, for example.

For example, it is preferable that the heat insulating layers 114 and 115 each have a thickness of not less than 3 and not more than 100 μm. More preferably, for example, the heat insulating layers 114 and 115 each have a thickness of not less than 5 μm and not more than 50 μm. One reason for this is that if the heat insulating layers 114 and 115 are too thin, it is not possible to obtain a sufficient heat insulating effect, and if the heat insulating layers 114 and 115 are too thick, a deterioration in thermal conductivity when heating the whole thermal recording medium 100A uniformly or a decrease in light transmissivity occurs.

The light-transmitting member 113 is provided to protect a surface of the recording layer 112 (in FIG. 3, the recording layer 112Y). Furthermore, as described above, the light-transmitting member 113 according to the present embodiment has an uneven shape in a plane of the surface (surface 113S1). The shape is not particularly limited, and in the plane, a distance from the surface (surface 113S1) of the light-transmitting member 113 to the recording layer 12 varies depending on any position in the plane. It is to be noted that the light-transmitting member 113 may have, in a rear surface (123S2) included in the light-transmitting member 113 and facing the recording layer 12, a recess that is to be included in a hollow structure between the recording layer 112 and the light-transmitting member 113.

The light-transmitting member 113 includes a material having light transmissivity, and examples of a composition material thereof include a polymeric material such as plastic, an inorganic material, and the like. Specifically, for example, the polymeric material includes acrylic resin, polycarbonate (PC), acrylonitrile butadiene-styrene resin (ABS), polyethylene telephthalate (PET), polyvinyl chloride (PVC), polypropylene (PP), polystyrene (PS), melamine resin, epoxy resin, or a copolymer thereof, or the like. The inorganic material includes, for example, silicon oxide ($SiO_x$) including glass, sapphire glass, or the like.

It is to be noted that although not illustrated, in a lower surface of the recording layer 112, for example, a layer including an adhesive, glue, or the like is provided, and the recording layer 112 is bonded onto the support substrate 111 via this layer.

(1-2. Manufacturing Method of Thermal Recording Medium)

For example, it is possible to manufacture the thermal recording medium 100A according to the present embodiment using a coating method. It is to be noted that the manufacturing method described in the following is an example of a method of directly forming, on the support substrate 111, each layer included in the thermal recording medium 100A.

First, as the support substrate 111, a white polyethylene telephthalate substrate having a thickness of 0.188 mm is prepared. Next, to 8.8 g of the solvent (methyl ethyl ketone (MEK)), 0.23 g of the leuco dye (magenta) as represented by Formula (3) below, 0.4 g of the developing/reducing agent (alkyl salicylate) as represented by Formula (2) above, 0.01 g of a phthalocyanine-based photothermal converting agent A (absorption wavelength: 915 nm), and 0.8 g of a polymeric material (poly(vinyl chloride-co-vinyl acetate (9:1))) are added, which are dispersed using a rocking mill for 2 hours to prepare a uniform dispersion (paint A). The paint A is applied on the support substrate 111 using a wire bar, and then heated and dried at 70°C for 5 minutes, thus forming the recording layer 112M that has a thickness of 3 μm and is to turn magenta.

[Chem. 3]

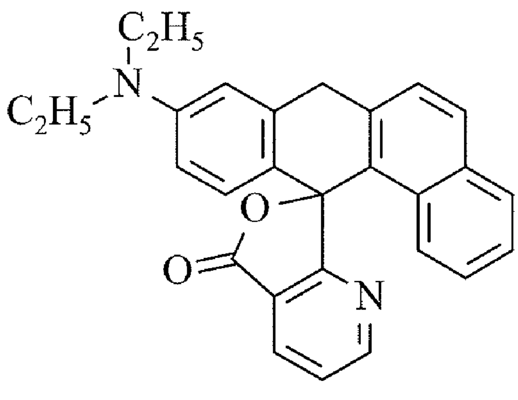

..... (3)

Subsequently, the heat insulating layer 114 is applied to be formed on the recording layer 112M, using a wire bar. Next, to 8.8 g of the solvent (methyl ethyl ketone (MEK)), 0.2 g of the leuco dye (cyan) as represented by Formula (4) below, 0.4 g of the developing/reducing agent (alkyl salicylate) as represented by Formula (2) above, 0.01 g of a

phthalocyanine-based photothermal converting agent B (absorption wavelength: 860 nm), and 0.8 g of the polymeric material (poly(vinyl chloride-co-vinyl acetate (9: 1))) are added, which are dispersed for 2 hours using a rocking mill to prepare a uniform dispersion (paint B). The paint B is applied on the heat insulating layer 114, and heated and dried at 70°C for 5 minutes, thus forming the recording layer 112C that has a thickness of 3 μm and is to turn cyan.

[Chem. 4]

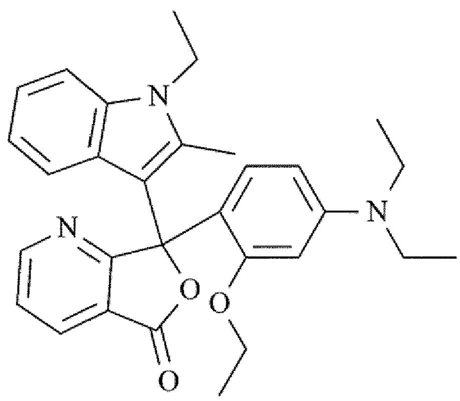

----- (4)

Subsequently, the heat insulating layer 115 is applied to be formed on the recording layer 112C, using a wire bar. Next, to 8.8 g of the solvent (methyl ethyl ketone (MEK)), 0.115 g of the leuco dye (yellow) as represented by Formula (5) below, 0.4 g of the developing/reducing agent (alkyl salicylate) as represented by Formula (2) above, 0.01 g of a phthalocyanine-based photothermal converting agent C (absorption wavelength: 760 nm), and 0.8 g of a polymer (poly(vinyl chloride-co-vinyl acetate (9: 1))) are added, which are dispersed for 2 hours using a rocking mill to prepare a uniform dispersion (paint C). The paint C is applied on the heat insulating layer 115, and heated and dried at 70°C for 5 minutes, thus forming the recording layer 112Y that has a thickness of 3 μm and is to turn yellow.

[Chem. 5]

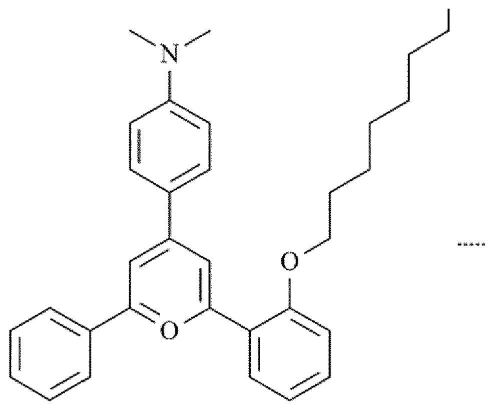

----- (5)

Finally, onto the recording layer 112Y, for example, the light-transmitting member 113 that is formed by in-mold molding or the like and has an uneven shape in the surface (surface 113S1) is bonded via a hot melt, an adhesive, glue, or the like, for example. As described above, the thermal recording medium 100A illustrated in FIG. 3 is completed.

It is to be noted that the recording layers 112M, 112C, and 112Y and the heat insulating layers 114 and 115 may be formed using a method other than coating as described above. For example, it is possible to form each layer using a general film forming method such as gravure coating, spray coating, spin coating, slit coating, or the like. Other than this, the method may include continuously stacking the layers as in wet-on-wet, drying each layer and then forming the next layer as in wet-on-dry, or bonding dry films as in a lamination method, and the stacking method is not particularly limited. Other than this, for example, the support substrate 111 may be immersed in a paint to form each of the recording layers 112M, 112C, and 112Y.

(1-3. Configuration of Drawing and Erasing Apparatus)

Next, the drawing and erasing apparatus 1 according to the present embodiment is described.

The drawing and erasing apparatus 1 includes, for example, a signal processing circuit 10 (controller), a laser drive circuit 20, a light source section 30, a multiplexer 40, a scanner 50, a scanner drive circuit 60, and an adjustment mechanism 70.

For example, the signal processing circuit 10 converts (color gamut conversion) an inputted signal Din (drawing signal or erasing signal) into an image signal corresponding to a wavelength of each light source (for example, each light source 31A, 31B, and 31C that is to be described later) in the light source section 30. For example, the signal processing circuit 10 generates a projection-image clock signal synchronizing with a scanner operation of the scanner 50. The signal processing circuit 10, for example, generates a projection image signal (projection image signal for drawing or projection image signal for erasing) to cause a laser beam to emit light in accordance with the generated image signal. The signal processing circuit 10, for example, outputs the generated projection image signal to the laser drive circuit 20. In addition, for example, the signal processing circuit 10 outputs the projection-image clock signal to the laser drive circuit 20 where necessary. Here, as described later, "where necessary" is a case of using the projection-image clock signal when synchronizing a signal source of a high-frequency signal with the image signal, etc.

For example, the laser drive circuit 20 drives each light source 31A, 31B, and 31C in the light source section 30 in accordance with the projection image signal corresponding to each wavelength. For example, the laser drive circuit 20 controls luminance (brightness and darkness) of the laser beam to draw an image (image for drawing or image for erasing) corresponding to the projection image signal. For example, the laser drive circuit 20 includes a drive circuit 21A that drives the light source 31A, a drive circuit 21B that drives the light source 31B, and a drive circuit 21C that drives the light source 31C. The light sources 31A, 31B, and 31C each emit a laser beam of a near infrared range (700 nm to 2500 nm). For example, the light source 31A is a semiconductor laser that emits a laser beam La having the emission wavelength λ1. For example, the light source 31B is a semiconductor laser that emits a laser beam Lb having the emission wavelength λ2. For example, the light source 31C is a semiconductor laser that emits a laser beam Lc having the emission wavelength λ3. For example, the emission wavelengths λ1, λ2, and λ3 satisfy the following Formulas (1), (2), and (3), respectively.

$$\lambda a1 - 20\ \text{nm} < \lambda 1 < \lambda a1 + 20\ \text{nm} \ldots (1)$$

$$\lambda a2 - 20\ \text{nm} < \lambda 2 < \lambda a2 + 20\ \text{nm} \ldots (2)$$

$$\lambda a3 - 20\ \text{nm} < \lambda 3 < \lambda a3 + 20\ \text{nm} \ldots (3)$$

Here, for example, λa1 is an absorption wavelength (absorption peak wavelength) of the recording layer 112M and is, for example, 915 nm. For example, λa2 is an absorption wavelength (absorption peak wavelength) of the recording layer 112C and is, for example, 860 nm. For example, λa3 is an absorption wavelength (absorption peak wavelength) of the recording layer 112Y and is, for example, 760 nm. It is to be noted that "±20 nm" in Formulas (1), (2), and (3) represents an allowable error range. In a case where the emission wavelengths λ1, λ2, and λ3 satisfy Formulas (1), (2), and (3), respectively, the emission wavelength λ1 is 915 nm, for example, the emission wavelength λ2 is 860 nm, for example, and the emission wavelength λ3 is 760 nm, for example.

The light source section 30 includes a light source used in writing information to and erasing written information from the thermal recording medium 100. For example, the light source section 30 includes the three light sources 31A, 31B, and 31C.

For example, the multiplexer 40 includes two reflection mirrors 41a and 41d and two dichroic mirrors 41b and 41c. For example, each of the laser beams La, Lb, and Lc emitted from a corresponding one of the light sources 31A, 31B, and 31C is turned into approximately parallel light (collimated light) by a collimate lens. Subsequently, for example, the laser beam La is reflected by the reflection mirror 41a and is also reflected by the dichroic mirror 41b. The laser beam Lb is transmitted through the dichroic mirrors 41b and 41c. The laser beam Lc is reflected by the reflection mirror 41d and is also reflected by the dichroic mirror 41c. This multiplexes the laser beam La, the laser beam Lb, and the laser beam Lc. The light source section 30 further includes a lens 42 that adjusts a beam shape of multiplexed light Lm obtained through multiplexing. For example, the multiplexer 40 outputs, to the scanner 50, the multiplexed light Lm obtained through multiplexing.

For example, the scanner 50 performs line-sequential scanning on a surface of the thermal recording medium 100 with the multiplexed light Lm entering from the multiplexer 40. The scanner 50 includes, for example, a dual axis

scanner 51 and an fθ lens 52. For example, the dual axis scanner 51 is a galvanometer mirror. The fθ lens 52 converts a uniform rotational motion by the dual axis scanner 51 into a uniform linear motion of a spot moving on a focal plane (the surface of the thermal recording medium 100).

For example, the scanner drive circuit 60 drives the scanner 50 in synchronization with the projection-image clock signal inputted from the signal processing circuit 10. In addition, for example, in a case where a signal concerning an irradiation angle of the dual axis scanner 51 or the like is inputted from the scanner 50, the scanner drive circuit 60 drives the scanner 50 on the basis of the signal to make a desired irradiation angle.

The adjustment mechanism 70 is a mechanism provided to adjust a focus of the multiplexed light Lm. For example, the adjustment mechanism 70 is a mechanism that adjusts a position of the lens 42 by manual operation by a user. It is to be noted that the adjustment mechanism 70 may be a mechanism that adjusts the position of the lens 42 by machine operation.

(1-4. Drawing Method and Erasing Method)

Next, writing (drawing) and erasing of information to and from the thermal recording medium 100 are described with reference to FIG. 2.

(Writing)

First, the thermal recording medium 100 is prepared, and set to the drawing and erasing apparatus 1 (Step S101). Next, the optical compensator 200 (optical correction jig 200A) is provided on the light-transmitting member 113 in the thermal recording medium 100 (Step S 102).

The optical compensator 200 has a fitting surface (surface 200S2 (one surface)) having a shape that fits the surface (surface 113S1) of the light-transmitting member 113 having an uneven shape, and a flat surface (surface 200S1 (another surface)) opposed to the fitting surface (surface 200S2). This flat surface (surface 200S1) is an entrance surface of the laser beam L (for example, the multiplexed light Lm). For example, it is desirable that the optical compensator 200 have a refractive index (n1) that is at the same level as a refractive index (n0) of the light-transmitting member 113. For example, it is preferable that a difference between the refractive index (n1) of the optical compensator 200 and the refractive index (n0) of the light-transmitting member 113 be not less than 0 and not more than 0.1. In the present embodiment, as the optical compensator 200, for example, the optical correction jig 200A including acrylic resin or the like is used. The fitting surface (surface 200S2) of the optical correction jig 200A has a reverse pattern of the uneven shape of the surface (surface 113S1) of the light-transmitting member 113. The optical correction jig 200A is removed after writing or erasing information to or from the thermal recording medium 100.

Subsequently, on the basis of the image signal for drawing, for example, with the multiplexed light Lm obtained through appropriate multiplexing of the laser beam La having an emission wavelength of 915 nm, the laser beam Lb of 860 nm, and the laser beam Lc of 760 nm, the thermal recording medium 100 is scanned via the optical correction jig 200A from a set of the drawing and erasing apparatus 1 (Step S103).

As a result, the laser beam L reaches the recording layer 112 without being refracted by the uneven shape of the surface (surface 113S1) of the light-transmitting member 113, and writing is performed in accordance with the image signal for drawing. For example, the laser beam La having the emission wavelength of 915 nm is absorbed by the photothermal converting agent in the recording layer 112M, and the heat generated by the photothermal converting agent causes the leuco dye in the recording layer 112M to reach a writing temperature and combine with the developing/reducing agent, to turn magenta. The color optical density of magenta depends on the intensity of the laser beam having the emission wavelength of 915 nm. In addition, the laser beam having the emission wavelength of 860 nm is absorbed by the photothermal converting agent in the recording layer 112C, and thereby the heat generated from the photothermal converting agent causes the leuco dye in the recording layer 112C to reach the writing temperature and combine with the developing/reducing agent, to turn cyan. The color optical density of cyan depends on the intensity of the laser beam having the emission wavelength of 860 nm. In addition, the laser beam having the emission wavelength of 760 nm is absorbed by the photothermal converting agent in the recording layer 112Y, and thereby the heat generated from the photothermal converting agent causes the leuco dye in the recording layer 112Y to reach the writing temperature and combine with the developing/reducing agent, to turn yellow. The color optical density of yellow depends on the intensity of the laser beam having the emission wavelength of 760 nm. As a result, a mixture of magenta, cyan, and yellow develops into a desired color. In this manner, information is written to the thermal recording medium 100.

(Erasing)

First, the thermal recording medium 100 on which information is written as described above is prepared, and set to the drawing and erasing apparatus 1. Then, as in writing, the optical correction jig 200A is provided on the light-transmitting member 113 in the thermal recording medium 100. Next, the light source section 30 is controlled to irradiate the thermal recording medium 100 with a laser beam. At this time, when irradiating the thermal recording medium 100 with the laser beam, the signal processing circuit 10 uses the laser beam La having the emission wavelength $\lambda 1$, the laser beam Lb having the emission wavelength $\lambda 2$, and the laser beam Lc having the emission wavelength $\lambda 3$.

Here, it is assumed that the wavelengths $\lambda 1$, $\lambda 2$, and $\lambda 3$ satisfy Formulas (1), (2), and (3) above, respectively. In this case, for example, the laser beam La having the emission wavelength $\lambda 1$ (for example, 915 nm) is absorbed by the photothermal converting agent in the recording layer 112M. In addition, for example, the laser beam Lb having the emission wavelength $\lambda 2$ (for example, 860 nm) is absorbed by the photothermal converting agent in the recording layer 112C. In addition, for example, the laser beam Lc having the emission wavelength $\lambda 3$ (for example, 760 nm) is absorbed by the photothermal converting agent in the recording layer 113Y. Consequently, the heat generated from the photothermal converting agent in each of the recording layers 112M, 112C, and 112Y causes the leuco dye in each recording layer 112 to reach an erasing temperature and separate from the developing/reducing agent to be decolored. In this manner, the drawing and erasing apparatus 1 erases information (drawn image) written on the thermal recording medium 100.

(1-5. Workings and Effects)

As described earlier, unlike a contact-type recording method using a thermal head, for example, the thermal recording technique using a laser allows noncontact recording, thus making it possible to perform drawing even if the thermal recording layer is not included in the outermost surface. For example, this makes it possible to perform drawing through thick glass, and this is expected to be applicable to information recording or a decorating technique, etc. that are yet to be achieved.

Meanwhile, in an upper portion of the thermal recording medium, a structure having light transmissivity is provided in the surface decoration. However, in use for decoration, the structure (surface decoration member) having light transmissivity and provided in the surface decoration does not necessarily have a uniform thickness, and for example, a case where the structure has a geometrical cross-sectional shape is assumed. In such a case, a refraction of the laser beam or variation in beam diameter, etc. occur at a surface of the surface decoration member, which is likely to cause a distortion of a drawn image or drawing unevenness, and result in a deterioration in display quality.

As an example, as in the present embodiment, when causing the laser beam L to directly enter the light-transmitting member 113 having an uneven shape in the surface, at an inclined surface included in the uneven shape, the laser beam L is refracted at the surface of the light-transmitting member 113, which results in an axis deviation by $\Delta$ from am assumed drawing position as illustrated in FIG. 5, for example. Alternatively, a lens effect of the light-transmitting member 113 causes variation in the spot diameter of the laser beam L, which results in variation in power density. The axis deviation in the laser beam L leads to a distortion in the drawn image, and the variation in power density leads to drawing unevenness, which is likely to prevent homogenous drawing.

FIG. 6 illustrates a relationship between the thickness of the surface decoration member and the axis deviation amount of the laser beam. For example, for the axis deviation amount in the surface decoration member having the inclined surface as illustrated in FIG. 5, although the axis deviation amount depends on a thickness h and a tilt angle $\theta$ of the member at an entering position of the laser beam, there is a case in which an axis deviation of not less than several hundred $\mu$m occurs in a case where n = 1.5, for example. In this case, this results in a clearly visible distortion in the drawn image, and deteriorates merchantability.

FIGs. 7 to 12 each describe an influence of the surface shape of the surface decoration member on the drawn image in more detail. For example, as illustrated in FIG. 7, when irradiating a surface decoration member 1113 having a flat surface with laser beams L1, L2, L3, and L4 at a predetermined pitch, drawing is performed on a recording layer 1112 in accordance with the pitch between each of the laser beams L1, L2, L3, and L4 (drawing positions X1, X2, X3, and X4). In contrast, when irradiating, with the laser beams L1, L2, L3, and L4, a microlens array (surface decoration member 2113) as illustrated in FIG. 8, the drawing position on the recording layer 1112 fluctuates depending on the surface shape of the microlens array at the entering position of each of the laser beams L1, L2, L3, and L4 (drawing positions X1, X2', X3', and X4).

In addition, for example, in a case of irradiating, with a beam, a glass substrate having a flat surface as illustrated in FIG. 7 at a pitch of 400 $\mu$m along both X and Y, spot positions thereof are evenly laid out as illustrated in FIG. 10. On the other hand, as illustrated in (A) and (B) of FIG. 11, for example, in a case of irradiating, with the above beam, a microlens array having, as a microlens array parameter (MLA parameter), a parallel array pitch ($P_P$): 10 mm, a vertical array pitch ($P_V$): 10 mm, a lens center thickness ($T_C$): 2 mm, a lens curvature radius (R): 10 mm (convex shape), and an MLA refractive index (n): 1.452322, the spot positions thereof are unevenly laid out as illustrated in FIG. 12. It is to be noted that (B) of FIG. 11 illustrates a cross section along a dotted line illustrated in (A) of FIG. 11.

In contrast, in the drawing method and the erasing method performed on the thermal recording medium 100 according to the present embodiment, the optical correction jig 200A is disposed on the thermal recording medium 100

that includes, on the recording layer 112, the light-transmitting member 113 having an uneven shape in the plane, and the laser beam L is emitted via this optical correction jig 200A. The optical correction jig 200A has a fitting surface (surface 200S2) having a reverse pattern of the uneven shape of the light-transmitting member 113 and a flat light-entering surface (surface 200S1). This allows the laser beam L emitted from the scanner 50 to reach the recording layer 112 without being refracted at the inclined surface of the light-transmitting member 113.

As described above, in the drawing method and the erasing method performed on the thermal recording medium 100 according to the present embodiment, the optical correction jig 200A is disposed, and the laser beam L is emitted through the optical correction jig 200A. The optical correction jig 200A has a fitting surface (surface 200S2) that fits the surface shape of the light-transmitting member 113 provided on the recording layer 112, and a flat light-entering surface (surface 200S1). This causes the emitted laser beam L to reach the recording layer 112 without being refracted at the inclined surface of the light-transmitting member 113. Thus, it becomes possible to perform drawing on the recording layer 112 without distortion, thus making it possible to improve image quality.

Furthermore, use of the drawing method and the erasing method for the thermal recording medium 100 according the present embodiment makes it possible to provide the surface decoration member (light-transmitting member 113) having a free shape on the recording layer 112 of the thermal recording medium 100, without considering the refraction of the laser beam L. Thus, it becomes possible to improve designability of the thermal recording medium 100.

Next, a second embodiment and a modification example of the present disclosure are described. In the following, the same reference numerals are assigned to components similar to those in the above first embodiment, and descriptions thereof are omitted as appropriate.

## <2. Second Embodiment>

FIG. 13 illustrates a drawing method and an erasing method performed on a thermal recording medium (thermal recording medium 100) according to a second embodiment of the present disclosure. For example, in the drawing method and the erasing method according to the present embodiment, the thermal recording medium 100 is immersed in a container 301 filled with a solvent having a refractive index that is at the same level as the light-transmitting member 113, to form, for example, an optical compensator 300 in a liquid state on the light-transmitting member 113 of the thermal recording medium 100, and the laser beam L is emitted through this optical compensator 300 in a liquid state, to thereby perform drawing on the recording layer 112 or erasing of an image drawn on the recording layer 112.

As long as the optical compensator 300 has a refractive index that is at the same level as the light-transmitting member 113 and a flat surface that is to be an entering surface of the laser beam L, the state is not particularly limitative, and may be liquid or in a gel state. For example, in a case where the light-transmitting member 113 has a refractive index of 1.5, it is possible to use toluene, glycerin, or the like as the solvent included in the optical compensator 300. In addition, as the optical compensator 300, for example, coating, for use, the thermal recording medium 100 with a curable resin that hardens by heat or light makes it easier to remove the optical compensator after drawing.

As described above, in the drawing method and the erasing method performed on the thermal recording medium 100 according to the present embodiment, the thermal recording medium 100 is immersed in the solvent having a refractive index that is at the same level as the light-transmitting member 113 to use the solvent covering the surface as the optical compensator 300, and the thermal recording medium 100 is irradiated with the laser beam L while being immersed. This causes the emitted laser beam L to reach the recording layer 112 without being refracted at the inclined surface of the light-transmitting member 113. As in the foregoing first embodiment, this makes it possible to perform drawing on the recording layer 112 without distortion, thus making it possible to improve display quality.

## <3. Modification Example>

FIG. 14 schematically illustrates a portion of a cross-sectional configuration of a thermal recording medium (thermal recording medium 100B) for which the drawing method and the erasing method according to the present disclosure is used. For example, the thermal recording medium 100B according to the present modification example includes a recording layer 312 that is provided on the surface of a support substrate 311 having a columnar shape, and a light-transmitting member 313 having an uneven shape in a plane. In the foregoing first and second embodiments, an example in which the recording layer 112 is provided on the support substrate 111 having a flat surface has been illustrated. However, as illustrated in FIG. 14, the drawing method and the erasing method performed on the thermal recording medium 100 according to the present disclosure are also applicable to the thermal recording medium 100B that includes the recording layer 312 having a curved surface.

## <4. Application Examples>

The drawing method and the erasing method described in the foregoing first and second embodiments are

applicable to, for example, drawing and erasing to be performed on the thermal recording medium (thermal recording medium 100) applied to an electronic watch 400, a smartphone 500, an automobile 600, a heated tobacco product 700, a 3D printed matter 800, and the like as illustrated in FIGs. 15 to 19. However, the configuration of the electronic watch 400 or the like using the thermal recording medium 100 as described in the following is a mere example, and is modifiable as appropriate. The thermal recording medium 100 is applicable to a portion of various electronic devices or clothing accessories. For example, as what is called a wearable terminal, it is possible to apply the thermal recording medium 100 to a portion of a clothing accessory such as a watch (wristwatch), a bag, clothing, a hat, a helmet, a headset, eyeglasses, and shoes, for example. Other than this, the type of the electronic device is not particularly limitative and includes, for example, a wearable display such as a heads-up display and a head-mounted display, a portable device having portability such as a portable audio player and a handheld game console, a robot, or a refrigerator, a washing machine, or the like. In addition, as a decorating member, for example, the thermal recording medium 100 is applicable not only to the electronic device or the clothing accessory but also to an exterior of a holder or a case for a heated tobacco product, an electronic cigarette, or the like, an interior or exterior of an automobile, an interior or exterior of a building such as a wall, an exterior of furniture such as a desk, or the like.

(Application Example 1)

FIG. 15 illustrates an appearance of the electronic watch 400 (an electronic device integrated with a wristwatch). This electronic watch includes, for example, a dial (character-information display portion) 410, a protective glass 420, and a band 430, and the dial 410 corresponds to the recording layer 112, and the protective glass 420 corresponds to the light-transmitting member 113, for example. The foregoing drawing method and erasing method make it possible to rewrite various characters and patterns on the dial 410, for example. For example, the band 430 is a portion attachable to an arm or the like. Providing likewise the recording layer 112 in the band 430 makes it possible to display various colors and patterns, thus making it possible to change the design of the band 430.

(Application Example 2)

FIG. 16A illustrates a configuration of an appearance of a front surface of the smartphone 500, and FIG. 16B illustrates a configuration of an appearance of a rear surface of the smartphone illustrated in FIG. 16A. For example, this smartphone includes a display section 510, a non-display section 520, and a housing 530. In a surface of the housing 530 on the rear surface side, for example, the thermal recording medium 100 is provided as an exterior member of the housing 530, for example, and this makes it possible to display various colors and patterns. It is to be noted that a smartphone is given as an example here, but the thermal recording medium 100 is applicable not only to this but also to a laptop personal computer (PC), a tablet PC, or the like, for example.

(Application Example 3)

FIG. 17A illustrates an appearance of an upper surface of the automobile 600, and FIG. 17B illustrates an appearance of a side surface of the automobile. For example, providing the thermal recording medium 1 or the like according to the present disclosure in a vehicle body such as a bonnet 611, a bumper 612, a roof 613, a boot lid 614, a front door 615, a rear door 616, and a rear bumper 617 makes it possible to display various information as well as colors and patterns in each portion. In addition, for example, providing the thermal recording medium 100 in an interior of an automobile such as a steering wheel or dashboard allows display of various colors and patterns.

(Application Example 4)

FIG. 18 illustrates an appearance of a cigarette holder 710 and a case 720 of the heated tobacco product 700. For example, providing the thermal recording medium 100 according to the present disclosure in a surface of a housing such as the cigarette holder 710 and the case 720 of the heated tobacco product allows display of various information as well as colors and patterns in each portion and rewriting thereof.

(Application Example 5)

FIG. 19 is a schematic diagram that illustrates a configuration of the 3D printed matter 800. The 3D printed matter 800 is a printed matter having a pattern that varies depending on a viewing angle or gives solid feeling. For example, the 3D printed matter 800 includes a lenticular sheet 810 and a base material 820 that are bonded together. In the lenticular sheet 810, semi-cylindrical convex lenses are linearly arranged, and on the base material 820, an image linearly synthesized in accordance with a pitch between the convex lenses is printed. Use of the light-transmitting member

113 in the thermal recording medium 100 according to the present disclosure in this lenticular sheet 810 and use of the recording layer 112 in the base material 820 makes it possible to achieve a configuration of the 3D printed matter that allows display of various information as well as colors and patterns and rewriting thereof.

## <5. Examples>

Next, Examples of the drawing method and the erasing method according to the foregoing first and second embodiments are described.

First, on a support base, recording layers that were to have respective colors of cyan (C), magenta (M), and yellow (Y) were formed in order, and a light-transmitting member having a predetermined uneven shape was formed on the recording layer that was to turn yellow (Y), and thus a thermal recording medium was prepared. In addition to this, the optical compensator having a parameter shown in Table 1 was disposed on the thermal recording medium, and solid drawing was performed in each color of CMY on a 5 cm × 5 cm region via this optical compensator (Experimental Examples 1 to 19). For a drawing condition, a laser power to cause an optical density (OD) of each color to be yellow (Y): 1.2, magenta (M): 1.6, and cyan (C): 1.6 was selected. At the time, a difference $OD_{(max-min)}$ between a maximum OD ($OD_{max}$) and a minimum OD ($OD_{min}$) at 25 points in the plane was defined as drawing unevenness. In addition, whether or not there was drawing unevenness was visually evaluated to identify a case where unevenness was not recognized as A and a case where unevenness was recognized as B.

It is to be noted that each parameter (pitch (1), height (h), tilt angle (θ), and refractive index (n)) of the light-transmitting member is assumed to correspond to FIG. 5, and each parameter (pitch (1), height (h), tilt angle (θ), and refractive index (n)) of the optical compensator is assumed to correspond to FIG. 20. Table 1 summarizes each parameter of the light-transmitting member used in each Experimental Example 1 to 19. Table 2 summarizes each parameter of the optical compensator (optical correction jig). Table 3 summarizes results of types of light-transmitting member and optical correction jig used in each Experimental Example 1 to 19, the OD difference ($OD_{(max-min)}$) in each color (C, M, and Y), and visual unevenness.

(Experimental Example 1)

In Experimental Example 1, a light-transmitting member 1 having a pitch (1) of 10 mm, a height (h) of 5 mm, a tilt angle (θ) of 20°, and a refractive index (n) of 1.5 was provided, and drawing was performed using an optical correction jig 1 fitting the light-transmitting member and having a pitch (1) of 10 mm, a height (h) of 5 mm, a tilt angle (θ) of 20°, and a refractive index (n) of 1.5.

(Experimental Example 2)

In Experimental Example 2, a light-transmitting member 2 having a pitch (1) of 10 mm, a height (h) of 1 mm, a tilt angle (θ) of 20°, and a refractive index (n) of 1.5 was provided, and drawing was performed using the optical correction jig 1 fitting the light-transmitting member and having a pitch (1) of 10 mm, a height (h) of 5 mm, a tilt angle (θ) of 20°, and a refractive index (n) of 1.5.

(Experimental Example 3)

In Experimental Example 3, a light-transmitting member 3 having a pitch (1) of 10 mm, a height (h) of 3 mm, a tilt angle (θ) of 20°, and a refractive index (n) of 1.5 was provided, and drawing was performed using the optical correction jig 1 fitting the light-transmitting member and having a pitch (1) of 10 mm, a height (h) of 5 mm, a tilt angle (θ) of 20°, and a refractive index (n) of 1.5.

(Experimental Example 4)

In Experimental Example 4, a light-transmitting member 4 having a pitch (1) of 10 mm, a height (h) of 5 mm, a tilt angle (θ) of 5°, and a refractive index (n) of 1.5 was provided, and drawing was performed using an optical correction jig 2 fitting the light-transmitting member and having a pitch (1) of 10 mm, a height (h) of 5 mm, a tilt angle (θ) of 5°, and a refractive index (n) of 1.5.

(Experimental Example 5)

In Experimental Example 5, a light-transmitting member 5 having a pitch (1) of 10 mm, a height (h) of 5 mm, a tilt angle (θ) of 10°, and a refractive index (n) of 1.5 was provided, and drawing was performed using an optical correction

jig 3 fitting the light-transmitting member and having a pitch (1) of 10 mm, a height (h) of 5 mm, a tilt angle (θ) of 10°, and a refractive index (n) of 1.5.

(Experimental Example 6)

In Experimental Example 6, a light-transmitting member 6 having a pitch (1) of 10 mm, a height (h) of 5 mm, a tilt angle (θ) of 30°, and a refractive index (n) of 1.5 was provided, and drawing was performed using an optical correction jig 4 fitting the light-transmitting member and having a pitch (1) of 10 mm, a height (h) of 5 mm, a tilt angle (θ) of 30°, and a refractive index (n) of 1.5.

(Experimental Example 7)

In Experimental Example 7, a light-transmitting member 7 having a pitch (1) of 5 mm, a height (h) of 5 mm, a tilt angle (θ) of 20°, and a refractive index (n) of 1.5 was provided, and drawing was performed using an optical correction jig 5 fitting the light-transmitting member and having a pitch (1) of 5 mm, a height (h) of 5 mm, a tilt angle (θ) of 20°, and a refractive index (n) of 1.5.

(Experimental Example 8)

In Experimental Example 8, a light-transmitting member 8 having a pitch (1) of 20 mm, a height (h) of 5 mm, a tilt angle (θ) of 20°, and a refractive index (n) of 1.5 was provided, and drawing was performed using an optical correction jig 6 fitting the light-transmitting member and having a pitch (1) of 20 mm, a height (h) of 5 mm, a tilt angle (θ) of 20°, and a refractive index (n) of 1.5.

(Experimental Example 9)

In Experimental Example 9, the light-transmitting member 1 having a pitch (1) of 10 mm, a height (h) of 5 mm, a tilt angle (θ) of 20°, and a refractive index (n) of 1.5 was provided, the thermal recording medium was immersed in the solvent, and drawing was performed.

(Experimental Example 10)

In Experimental Example 10, the light-transmitting member 6 having a pitch (1) of 10 mm, a height (h) of 5 mm, a tilt angle (θ) of 30°, and a refractive index (n) of 1.5 was provided, the thermal recording medium was immersed in the solvent, and drawing was performed.

(Experimental Example 11)

In Experimental Example 11, the light-transmitting member 7 having a pitch (1) of 5 mm, a height (h) of 5 mm, a tilt angle (θ) of 20°, and a refractive index (n) of 1.5 was provided, the thermal recording medium was immersed in the solvent, and drawing was performed.

(Experimental Example 12)

In Experimental Example 1, the light-transmitting member 1 having a pitch (1) of 10 mm, a height (h) of 5 mm, a tilt angle (θ) of 20°, and a refractive index (n) of 1.5 was provided, and drawing was performed without using the optical compensator.

(Experimental Example 13)

In Experimental Example 2, the light-transmitting member 2 having a pitch (1) of 10 mm, a height (h) of 1 mm, a tilt angle (θ) of 20°, and a refractive index (n) of 1.5 was provided, and drawing was performed without using the optical compensator.

(Experimental Example 14)

In Experimental Example 3, the light-transmitting member 3 having a pitch (1) of 10 mm, a height (h) of 3 mm, a tilt angle (θ) of 20°, and a refractive index (n) of 1.5 was provided, and drawing was performed without using the optical

compensator.

(Experimental Example 15)

In Experimental Example 4, the light-transmitting member 4 having a pitch (1) of 10 mm, a height (h) of 5 mm, a tilt angle (θ) of 5°, and a refractive index (n) of 1.5 was provided, and drawing was performed without using the optical compensator.

(Experimental Example 16)

In Experimental Example 5, the light-transmitting member 5 having a pitch (1) of 10 mm, a height (h) of 5 mm, a tilt angle (θ) of 10°, and a refractive index (n) of 1.5 was provided, and drawing was performed without using the optical compensator.

(Experimental Example 17)

In Experimental Example 6, the light-transmitting member 6 having a pitch (1) of 10 mm, a height (h) of 5 mm, a tilt angle (θ) of 30°, and a refractive index (n) of 1.5 was provided, and drawing was performed without using the optical compensator.

(Experimental Example 18)

In Experimental Example 7, the light-transmitting member 7 having a pitch (1) of 5 mm, a height (h) of 5 mm, a tilt angle (θ) of 20°, and a refractive index (n) of 1.5 was provided, and drawing was performed without using the optical compensator.

(Experimental Example 19)

In Experimental Example 8, the light-transmitting member 8 having a pitch (1) of 20 mm, a height (h) of 5 mm, a tilt angle (θ) of 20°, and a refractive index (n) of 1.5 was provided, and drawing was performed without using the optical compensator.

[Table 1]

| | Pitch (L) | Height (h) | Tilt angle (θ) | Refractive index (n) |
|---|---|---|---|---|
| Light -transmitting member 1 | 10 mm | 5 mm | 20° | 1.5 |
| Light -transmitting member 2 | 10 mm | 1 mm | 20° | 1.5 |
| Light -transmitting member 3 | 10 mm | 3 mm | 20° | 1.5 |
| Light -transmitting member 4 | 10 mm | 5 mm | 5° | 1.5 |
| Light -transmitting member 5 | 10 mm | 5 mm | 10° | 1.5 |
| Light -transmitting member 6 | 10 mm | 5 mm | 30° | 1.5 |
| Light -transmitting member 7 | 5 mm | 5 mm | 20° | 1.5 |
| Light -transmitting member 8 | 20 mm | 5 mm | 20° | 1.5 |

[Table 2]

| | Pitch (L) | Height (h) | Tilt angle (θ) | Refractive index (n) |
|---|---|---|---|---|
| Optical correction jig 1 | 10 mm | 5 mm | 20° | 1.5 |
| Optical correction jig 2 | 10 mm | 5 mm | 5° | 1.5 |
| Optical correction jig 3 | 10 mm | 5 mm | 10° | 1.5 |
| Optical correction jig 4 | 10 mm | 5 mm | 30° | 1.5 |

(continued)

| | Pitch (L) | Height (h) | Tilt angle (θ) | Refractive index (n) |
|---|---|---|---|---|
| Optical correction jig 5 | 5 mm | 5 mm | 20° | 1.5 |
| Optical correction jig 6 | 20 mm | 5 mm | 20° | 1.5 |

[Table 3]

| | Configuration of light -transmitting member | Configuration of optical compensator | $OD_{(max-min)}$ | | | Visual unevenness | | |
|---|---|---|---|---|---|---|---|---|
| | | | C | M | C | C | M | C |
| Experimental Example 1 | Light -transmitting member 1 | Optical correction jig 1 | ≤0. 1 | ≤0. 1 | ≤0. 1 | A | A | A |
| Experimental Example 2 | Light -transmitting member 2 | Optical correction jig 1 | ≤0. 1 | ≤0. 1 | ≤0. 1 | A | A | A |
| Experimental Example 3 | Light -transmitting member 3 | Optical correction jig 1 | ≤0. 1 | ≤0. 1 | ≤0. 1 | A | A | A |
| Experimental Example 4 | Light -transmitting member 4 | Optical correction jig 2 | ≤0. 1 | ≤0. 1 | ≤0. 1 | A | A | A |
| Experimental Example 5 | Light -transmitting member 5 | Optical correction jig 3 | ≤0. 1 | ≤0. 1 | ≤0. 1 | A | A | A |
| Experimental Example 6 | Light -transmitting member 6 | Optical correction jig 4 | ≤0. 1 | ≤0. 1 | ≤0. 1 | A | A | A |
| Experimental Example 7 | Light -transmitting member 7 | Optical correction jig 5 | ≤0. 1 | ≤0. 1 | ≤0. 1 | A | A | A |
| Experimental Example 8 | Light -transmitting member 8 | Optical correction jig 6 | ≤0. 1 | ≤0. 1 | ≤0. 1 | A | A | A |
| Experimental Example 9 | Light -transmitting member 1 | Solvent | ≤0. 1 | ≤0. 1 | ≤0. 1 | A | A | A |
| Experimental Example 10 | Light -transmitting member 6 | Solvent | ≤0. 1 | ≤0. 1 | ≤0. 1 | A | A | A |
| Experimental Example 11 | Light -transmitting member 7 | Solvent | ≤0. 1 | ≤0. 1 | ≤0. 1 | A | A | A |
| Experimental Example 12 | Light -transmitting member 1 | - | 0.2 | 0.3 | 0.4 | A | B | B |
| Experimental Example 13 | Light -transmitting member 2 | - | 0.1 | 0.2 | 0.2 | A | B | B |
| Experimental Example 14 | Light -transmitting member 3 | - | 0.2 | 0.3 | 0.3 | A | B | B |
| Experimental Example 15 | Light -transmitting member 4 | - | 0.1 | 0.2 | 0.2 | A | B | B |
| Experimental Example 16 | Light -transmitting member 5 | - | 0.2 | 0.3 | 0.3 | A | B | B |
| Experimental Example 17 | Light -transmitting member 6 | - | 0.3 | 0.4 | 0.5 | B | B | B |
| Experimental Example 18 | Light -transmitting member 7 | - | 0.3 | 0.5 | 0.5 | B | B | B |

(continued)

| | Configuration of light -transmitting member | Configuration of optical compensator | $OD_{(max-min)}$ | | | Visual unevenness | | |
|---|---|---|---|---|---|---|---|---|
| | | | C | M | C | C | M | C |
| Experimental Example 19 | Light -transmitting member 8 | | 0.1 | 0.2 | 2 | A | B | B |

According to Table 3, in Experimental Examples 12 to 19 in which the optical compensator was not used, visual unevenness was recognized. In particular, it was recognized that the light-transmitting member that was significantly influenced by light refraction (for example, the light-transmitting members 6 and 7) had a tendency to have a larger optical density difference (OD($_{max-min}$)). On the other hand, in Experimental Examples 1 to 11 in which the optical compensator was used, visual unevenness was not recognized irrespective of a state (solid or liquid) of the optical compensator. In addition, there was a small optical density difference (OD($_{max-min}$)) of not more than 0.1.

According to the results described above, as a result of disposing, on the light-transmitting member provided on the recording layer, the optical compensator having a fitting surface that fits the unevenness of the surface of the light-transmitting member on a one-to-one basis and a flat surface opposed to the fitting surface and having a refractive index equivalent to that of the light-transmitting member, and performing drawing or erasing through this, the light-transmitting member and the optical compensator form a pair to serve as a flat layer having light transmissivity to cause the laser beam to reach the recording layer without being refracted, which makes it possible to perform drawing or erasing of good quality without distortion. Thus, the drawing method and the erasing method according to the present disclosure makes it possible to perform on-demand drawing in accordance with customer needs. In addition, unlike a previously-printed product, for example, it is not necessary to hold a commodity in stock. Furthermore, the thermal recording medium that allows repeated writing and erasing also allows rewriting where necessary.

The present disclosure has been described with reference to the first and second embodiments and the modification example, and Examples, but the present disclosure is not limited to the modes described in the foregoing embodiments, etc. and various modifications are possible. For example, it is not necessary to include all the components described in the foregoing embodiments, etc., and another component may further be included. In addition, the material and thickness of the components described above are examples, and are not limited to those described.

For example, in the foregoing first embodiment, an example in which the recording layer 112 (in FIG. 3, the recording layer 112M) is directly provided on the support substrate 111 has been illustrated. However, for example, a layer having a configuration similar to that of the heat insulating layers 114 and 115 or the like may be additionally provided between the support substrate 111 and the recording layer 112M.

Furthermore, in the foregoing first embodiment, as the thermal recording medium 100, an example has been illustrated in which the three types of recording layers 112 (112M, 112C, and 112Y) that are to develop colors different from each other are stacked with each of the heat insulating layers 114 and 115 therebetween, but this is not limitative. For example, a reversible recording medium that allows multicolor display by a single layer structure may be used, which includes, for example, a mixture of three types of coloring compounds that are each enclosed in a microcapsule and are to develop colors different from each other. Furthermore, for example, without being limited to the microcapsule, a reversible recording medium that includes a recording layer including a three-dimensional structure in a fibrous state may be used. It is preferable that a fiber used here have, for example, what is called a core-sheath structure that includes a core containing a coloring compound that is to develop a desired color, and a developing/reducing agent and a photothermal converting agent corresponding thereto, and a sheath that covers this core and includes a heat insulating material. Forming the three-dimensional structure with use of a plurality of types of fibers having the core-sheath structure and including coloring compounds that are to develop colors different from each other makes it possible to manufacture a reversible recording medium that allows multicolor display.

In addition, in the foregoing first embodiment, an example of using one apparatus in drawing to the thermal recording medium 100 and erasing of the image drawn on the thermal recording medium 100 has been illustrated, but a separate apparatus may be used in each of the drawing and erasing.

The present application claims the priority on the basis of Japanese Patent Application No. 2018-204199 filed on October 30, 2018 with Japan Patent Office.

It should be understood by those skilled in the art that various modifications, combinations, sub-combinations, and alterations may occur depending on design requirements and other factors insofar as they are within the scope of the appended claims.

## Claims

1. A drawing method used when performing drawing on a thermal recording medium that includes, above a recording layer, a light-transmitting member having an uneven shape in a plane, the drawing method comprising:

   providing, on the light-transmitting member, an optical compensator having one surface and another surface to cause the one surface and the light-transmitting member to face each other, the one surface having a shape that fits the uneven shape of the light-transmitting member and the other surface being flat and opposed to the one surface; and
   irradiating the thermal recording medium with a laser beam via the optical compensator.

2. The drawing method according to claim 1, wherein the optical compensator is removed after irradiation with the laser beam.

3. The drawing method according to claim 1, wherein the optical compensator having a refractive index is used, the refractive index being different from a refractive index of the light-transmitting member by not less than 0 and not more than 0.1.

4. The drawing method according to claim 1, wherein an optical correction jig is used as the optical compensator, the optical correction jig having, in the one surface, a reverse pattern of the uneven shape of the light-transmitting member.

5. The drawing method according to claim 1, wherein gel is used as the optical compensator.

6. The drawing method according to claim 1, wherein a solvent is used as the optical compensator.

7. The drawing method according to claim 6, wherein the thermal recording medium is immersed in the solvent, to thereby form, on the thermal recording medium, the optical compensator including the solvent.

8. The drawing method according to claim 1, wherein a curable resin is used as the optical compensator, and the resin in a liquid state is applied onto the thermal recording medium and thereafter hardened, to thereby form the optical compensator.

9. The drawing method according to claim 8, wherein the optical compensator is removed after drawing.

10. The drawing method according to claim 1, wherein

    the recording layer includes a coloring compound having an electron-donating property, a developer having an electron-accepting property, a photothermal converting agent, and a polymeric material, and
    drawing on the recording layer is performed through irradiation with the laser beam.

11. An erasing method used when erasing an image from a thermal recording medium that includes, above a recording layer, a light-transmitting member having an uneven shape in a plane, the erasing method comprising:

    providing, on the light-transmitting member, an optical compensator having one surface and another surface to cause the one surface and the light-transmitting member to face each other, the one surface having a shape that fits the uneven shape of the light-transmitting member and the other surface being flat and opposed to the one surface; and
    irradiating the thermal recording medium with a laser beam via the optical compensator.

12. The erasing method according to claim 11, wherein

    the recording layer includes a coloring compound having an electron-donating property, a developing/reducing agent having an electron-accepting property, a photothermal converting agent, and a polymeric material, and
    the image drawn on the recording layer is erased through irradiation with the laser beam.

## Patentansprüche

1. Zeichenverfahren, das beim Zeichnen auf einem thermischen Aufzeichnungsmedium, das über einer Aufzeichnungsschicht ein lichtdurchlässiges Element mit einer unebenen Gestalt in einer Ebene aufweist, angewandt wird, wobei das Zeichenverfahren umfasst:

   Bereitstellen eines optischen Kompensators mit einer Fläche und einer anderen Fläche auf dem lichtdurchlässigen Element, so dass die eine Fläche und das lichtdurchlässige Element zueinander weisen, wobei die eine Fläche eine Gestalt aufweist, die auf die unebene Fläche des lichtdurchlässigen Elements passt, und die andere Fläche flach ist und der einen Fläche gegenüber liegt; und
   Bestrahlen des thermischen Aufzeichnungsmediums mit einem Laserstrahl über den optischen Kompensator.

2. Zeichenverfahren nach Anspruch 1, wobei der optische Kompensator nach der Bestrahlung mit dem Laserstrahl entfernt wird.

3. Zeichenverfahren nach Anspruch 1, wobei der optische Kompensator mit einem Brechungsindex verwendet wird, wobei der Brechungsindex von einem Brechungsindex des lichtdurchlässigen Elements um nicht weniger als 0 und nicht mehr als 0,1 verschieden ist.

4. Zeichenverfahren nach Anspruch 1, wobei eine optische Korrekturvorrichtung als optischer Kompensator verwendet wird, wobei die optische Korrekturvorrichtung an der einen Fläche ein umgekehrtes Muster der unebenen Gestalt des lichtdurchlässigen Elements aufweist.

5. Zeichenverfahren nach Anspruch 1, wobei ein Gel als optischer Kompensator verwendet wird.

6. Zeichenverfahren nach Anspruch 1, wobei ein Lösungsmittel als optischer Kompensator verwendet wird.

7. Zeichenverfahren nach Anspruch 6, wobei das thermische Aufzeichnungsmedium in das Lösungsmittel getaucht wird, um dadurch auf dem thermischen Aufzeichnungsmedium den optischen Kompensator, darunter das Lösungsmittel, zu bilden.

8. Zeichenverfahren nach Anspruch 1, wobei ein härtbares Harz als optischer Kompensator verwendet wird und das Harz in einem flüssigen Zustand auf das thermische Aufzeichnungsmedium aufgetragen und danach gehärtet wird, um dadurch den optischen Kompensator zu bilden.

9. Zeichenverfahren nach Anspruch 8, wobei der optische Kompensator nach dem Zeichnen entfernt wird.

10. Zeichenverfahren nach Anspruch 1, wobei

    die Aufzeichnungsschicht eine färbende Verbindung mit einer elektronenabgebenden Eigenschaft, einen Entwickler mit einer elektronenaufnehmenden Eigenschaft, ein fotothermisches Umwandlungsmittel und ein Polymermaterial enthält und
    Zeichnen auf der Aufzeichnungsschicht durch Bestrahlung mit dem Laserstrahl erfolgt.

11. Löschverfahren, das beim Löschen eines Bildes von einem thermischen Aufzeichnungsmedium, das über einer Aufzeichnungsschicht ein lichtdurchlässiges Element mit einer unebenen Gestalt in einer Ebene umfasst, angewandt wird, wobei das Löschverfahren umfasst:

    Bereitstellen eines optischen Kompensators mit einer Fläche und einer anderen Fläche auf dem lichtdurchlässigen Element, so dass die eine Fläche und das lichtdurchlässige Element zueinander weisen, wobei die eine Fläche eine Gestalt aufweist, die auf die unebene Fläche des lichtdurchlässigen Elements passt, und die andere Fläche flach ist und der einen Fläche gegenüber liegt; und
    Bestrahlen des thermischen Aufzeichnungsmediums mit einem Laserstrahl über den optischen Kompensator.

12. Löschverfahren nach Anspruch 11, wobei

    die Aufzeichnungsschicht eine färbende Verbindung mit einer elektronenabgebenden Eigenschaft, ein Entwicklungs-/Reduziermittel mit einer elektronenaufnehmenden Eigenschaft, ein fotothermisches Umwandlungsmittel

und ein Polymermaterial enthält und
das auf der Aufzeichnungsschicht gezeichnete Bild durch Bestrahlung mit dem Laserstrahl gelöscht wird.

## Revendications

1. Procédé de dessin utilisé lors de la réalisation d'un dessin sur un support d'enregistrement thermique qui comporte, au-dessus d'une couche d'enregistrement, un élément transmettant la lumière ayant une forme irrégulière dans un plan, le procédé de dessin comprenant :

   la mise en place, sur l'élément transmettant la lumière, d'un compensateur optique ayant une surface donnée et une autre surface pour faire en sorte que la surface donnée et l'élément transmettant la lumière soient en face l'un de l'autre, la surface donnée ayant une forme qui épouse la forme irrégulière de l'élément transmettant la lumière et l'autre surface étant plate et à l'opposé de la surface donnée ; et
   l'irradiation du support d'enregistrement thermique avec un faisceau laser par le biais du compensateur optique.

2. Procédé de dessin selon la revendication 1, dans lequel le compensateur optique est retiré après irradiation avec le faisceau laser.

3. Procédé de dessin selon la revendication 1, dans lequel le compensateur optique ayant un indice de réfraction est utilisé, l'indice de réfraction différant d'un indice de réfraction de l'élément transmettant la lumière par pas moins de 0 et pas plus de 0,1.

4. Procédé de dessin selon la revendication 1, dans lequel un montage de correction optique est utilisé comme le compensateur optique, le montage de correction optique ayant, dans la surface donnée, un motif inverse de la forme irrégulière de l'élément transmettant la lumière.

5. Procédé de dessin selon la revendication 1, dans lequel du gel est utilisé comme le compensateur optique.

6. Procédé de dessin selon la revendication 1, dans lequel un solvant est utilisé comme le compensateur optique.

7. Procédé de dessin selon la revendication 6, dans lequel le support d'enregistrement thermique est plongé dans le solvant, pour former ainsi, sur le support d'enregistrement thermique, le compensateur optique comportant le solvant.

8. Procédé de dessin selon la revendication 1, dans lequel une résine durcissable est utilisée comme le compensateur optique, et la résine dans un état liquide est appliquée sur le support d'enregistrement thermique et ensuite durcie, pour former ainsi le compensateur optique.

9. Procédé de dessin selon la revendication 8, dans lequel le compensateur optique est retiré après le dessin.

10. Procédé de dessin selon la revendication 1, dans lequel

    la couche d'enregistrement comporte un composé colorant ayant une propriété de donneur d'électrons, un révélateur ayant une propriété d'accepteur d'électrons, un agent de conversion photothermique, et un matériau polymère, et
    le dessin sur la couche d'enregistrement est réalisé par irradiation avec le faisceau laser.

11. Procédé d'effacement utilisé lors de l'effacement d'une image d'un support d'enregistrement thermique qui comporte, au-dessus d'une couche d'enregistrement, un élément transmettant la lumière ayant une forme irrégulière dans un plan, le procédé d'effacement comprenant :

    la mise en place, sur l'élément transmettant la lumière, d'un compensateur optique ayant une surface donnée et une autre surface pour faire en sorte que la surface donnée et l'élément transmettant la lumière soient en face l'un de l'autre, la surface donnée ayant une forme qui épouse la forme irrégulière de l'élément transmettant la lumière et l'autre surface étant plate et à l'opposé de la surface donnée ; et
    l'irradiation du support d'enregistrement thermique avec un faisceau laser par le biais du compensateur optique.

12. Procédé d'effacement selon la revendication 11, dans lequel

la couche d'enregistrement comporte un composé colorant ayant une propriété de donneur d'électrons, un agent révélateur/réducteur ayant une propriété d'accepteur d'électrons, un agent de conversion photothermique, et un matériau polymère, et
l'image dessinée sur la couche d'enregistrement est effacée par irradiation avec le faisceau laser.

[ FIG. 1 ]

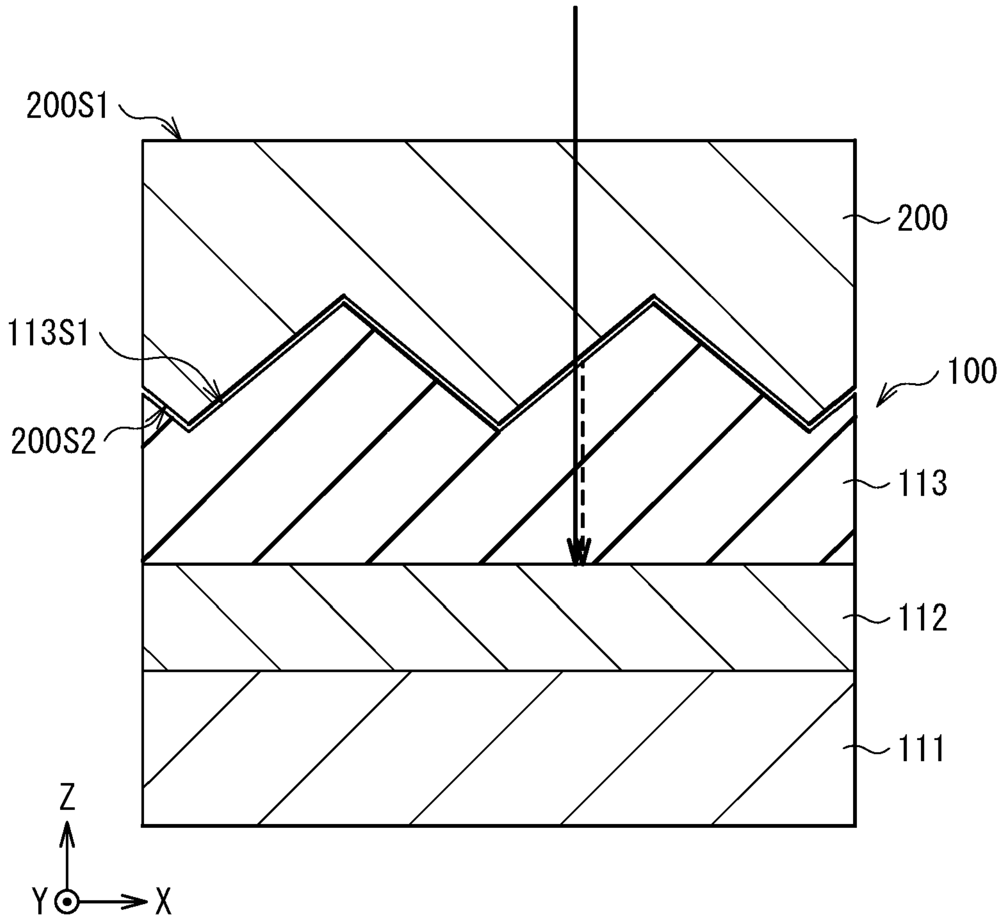
200S1
200
113S1
100
200S2
113
112
111
Z
Y
X

[ FIG. 2 ]

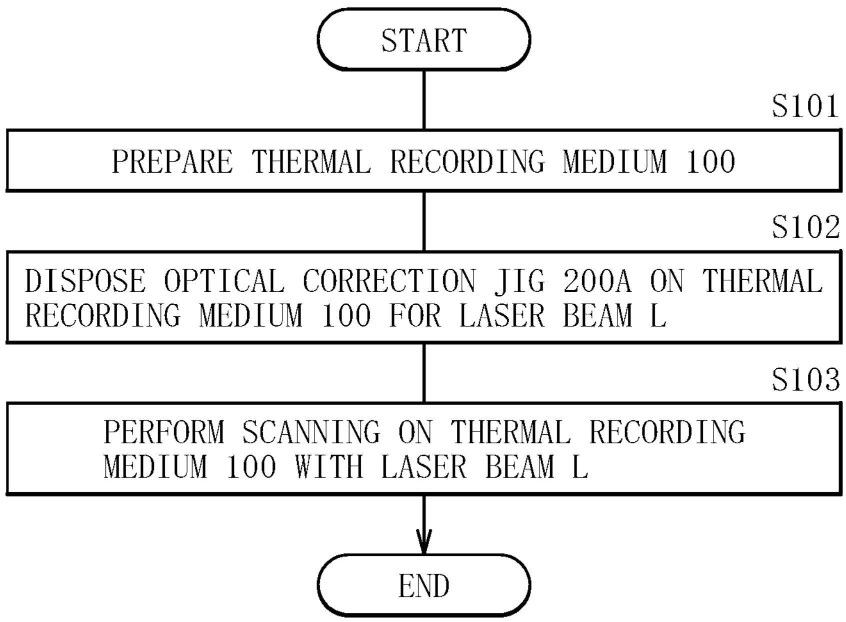
START
S101
PREPARE THERMAL RECORDING MEDIUM 100
S102
DISPOSE OPTICAL CORRECTION JIG 200A ON THERMAL RECORDING MEDIUM 100 FOR LASER BEAM L
S103
PERFORM SCANNING ON THERMAL RECORDING MEDIUM 100 WITH LASER BEAM L
END

[ FIG. 3 ]

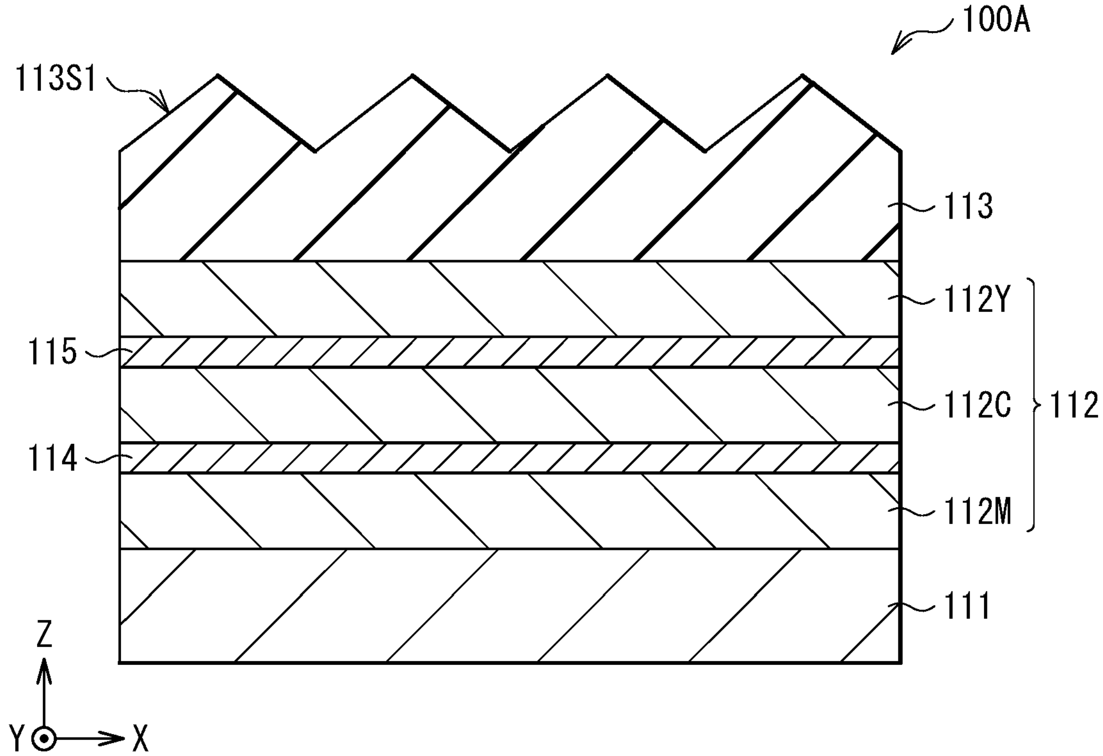

[ FIG. 4 ]

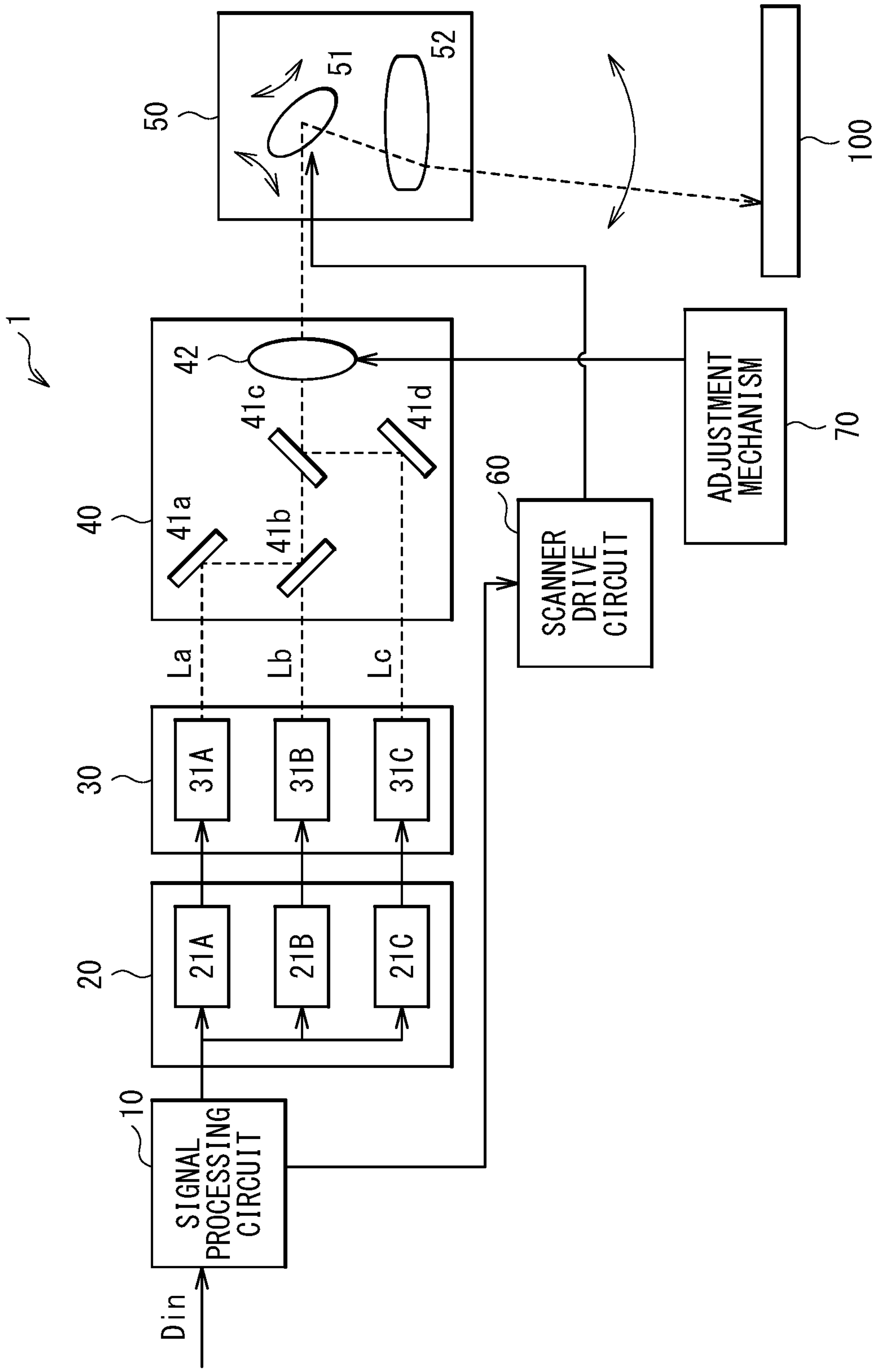
1
Din
10
SIGNAL PROCESSING CIRCUIT
20
21A
21B
21C
30
31A
31B
31C
La
Lb
Lc
40
41a
41b
41c
41d
42
50
51
52
60
SCANNER DRIVE CIRCUIT
70
ADJUSTMENT MECHANISM
100

[ FIG. 5 ]

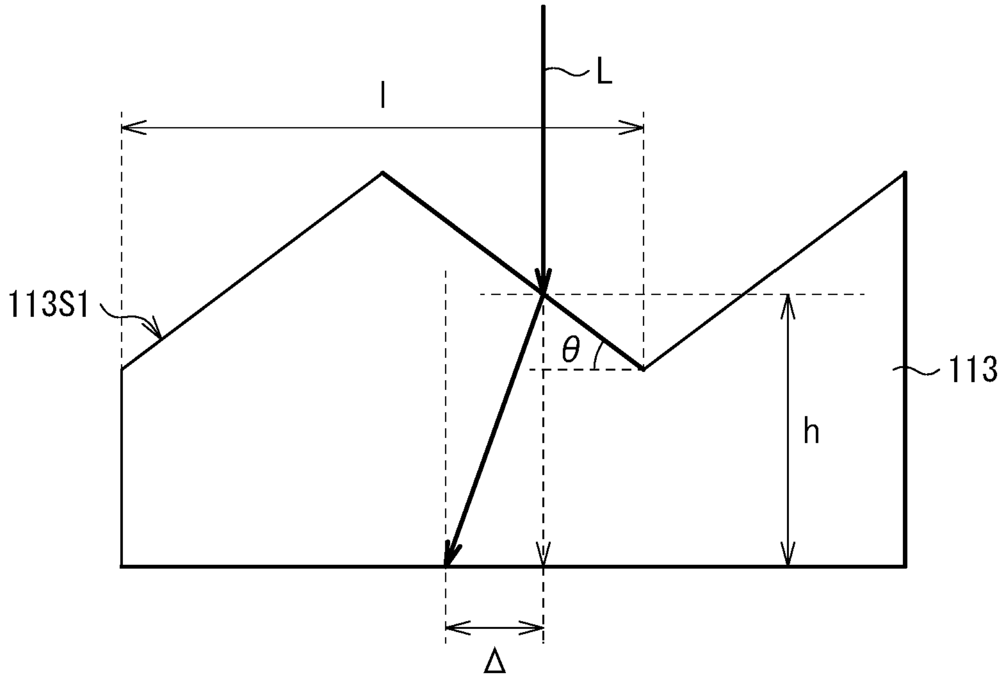
L
l
113S1
θ
113
h
Δ

[ FIG. 6 ]

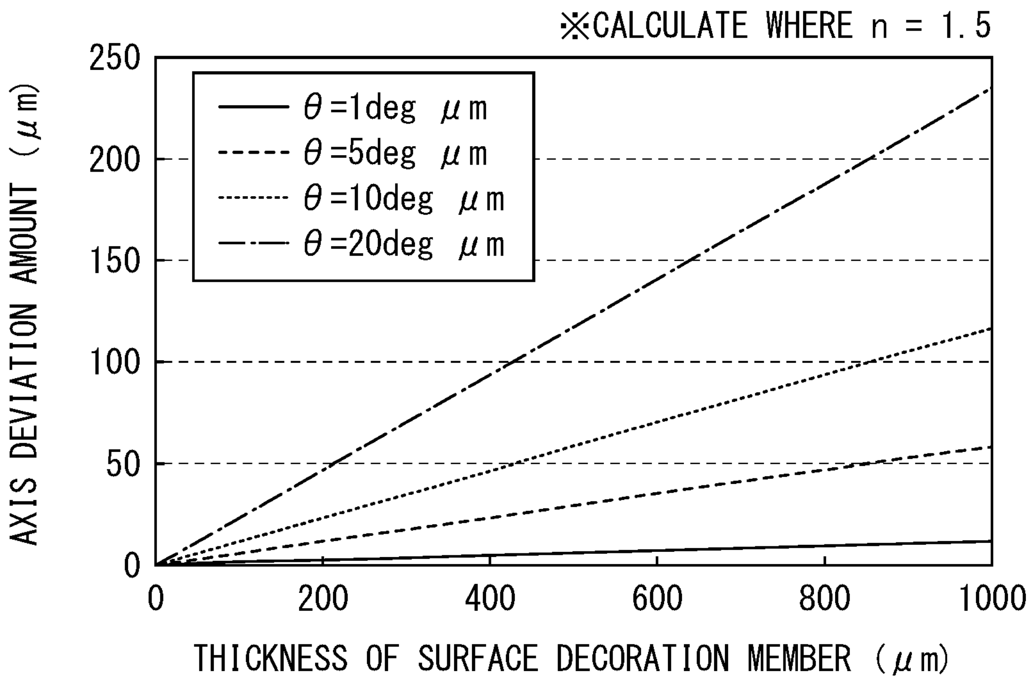
※CALCULATE WHERE n = 1.5
θ =1deg μm
θ =5deg μm
θ =10deg μm
θ =20deg μm
AXIS DEVIATION AMOUNT (μm)
THICKNESS OF SURFACE DECORATION MEMBER (μm)
0
50
100
150
200
250
0
200
400
600
800
1000

[ FIG. 7 ]

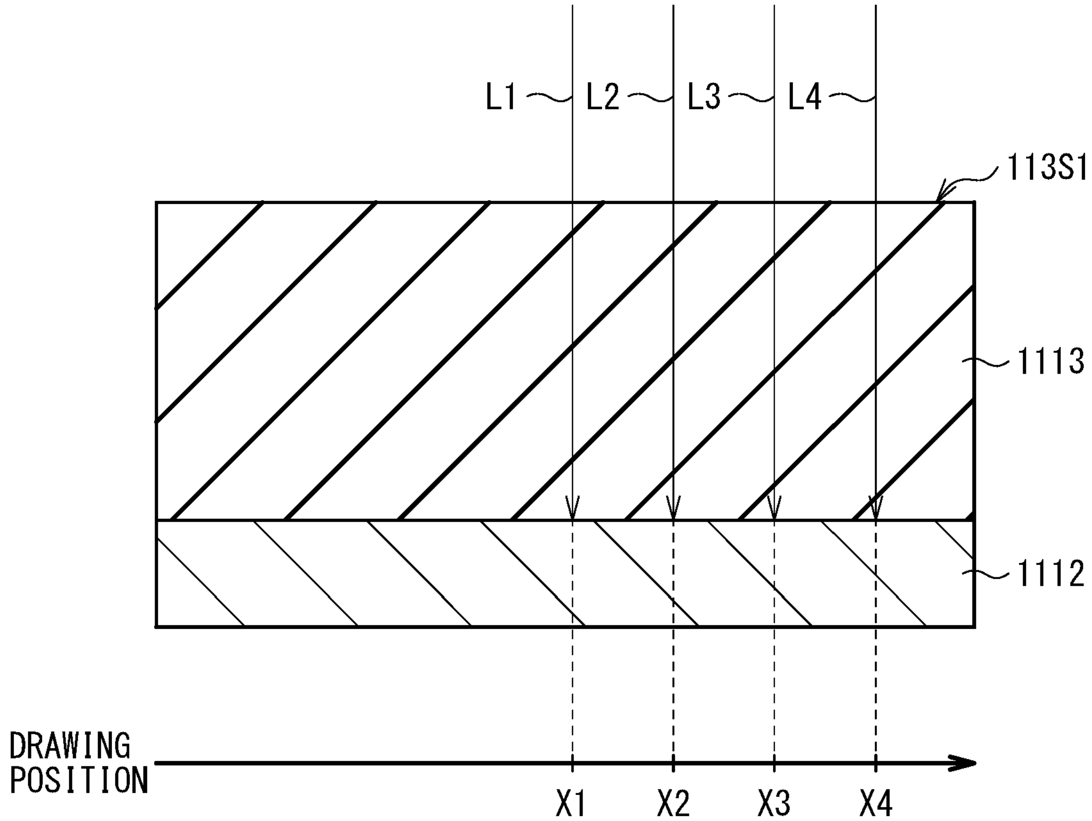


[ FIG. 8 ]

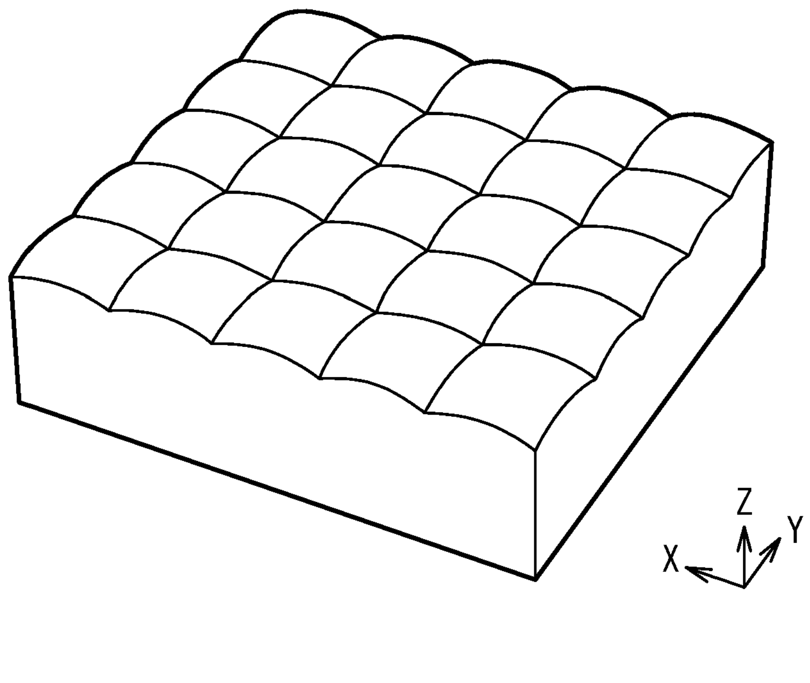

[ FIG. 9 ]

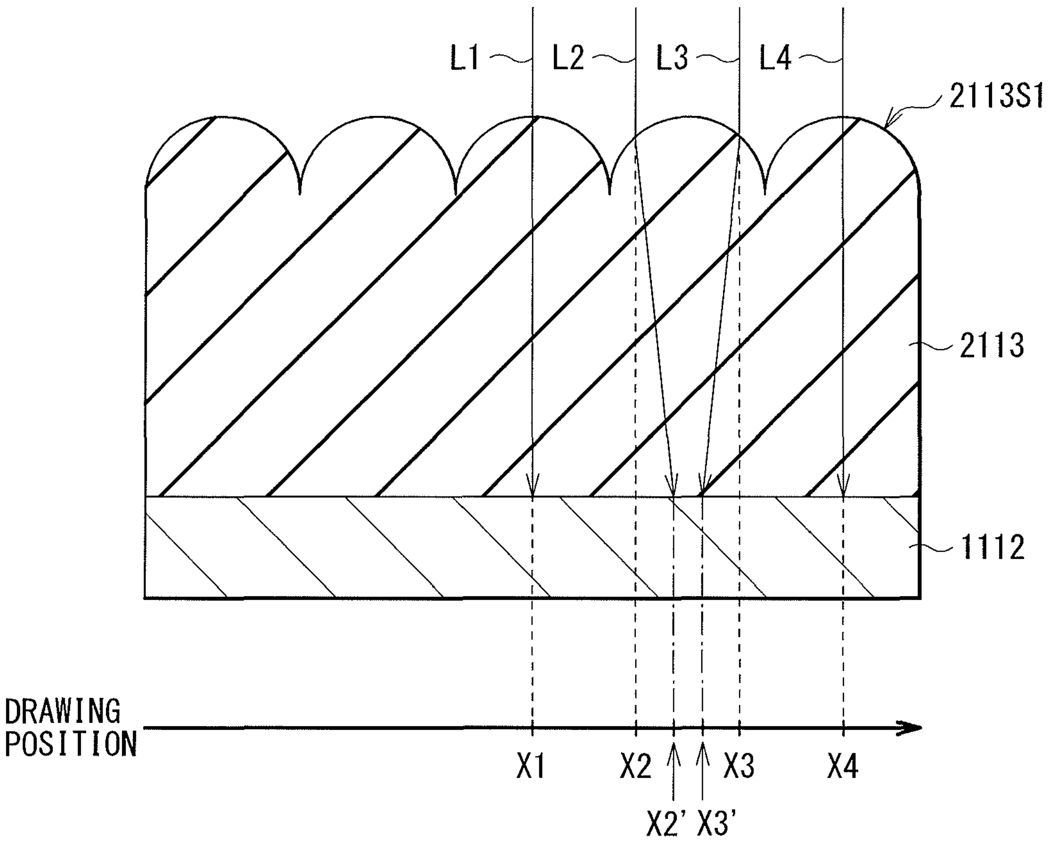
L1
L2
L3
L4
2113S1
2113
1112
DRAWING POSITION
X1
X2
X3
X4
X2'
X3'

[ FIG. 10 ]

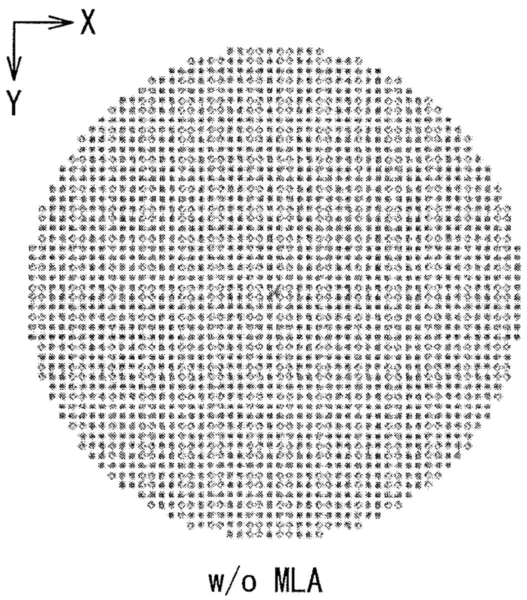
X
Y
w/o MLA

[ FIG. 11 ]

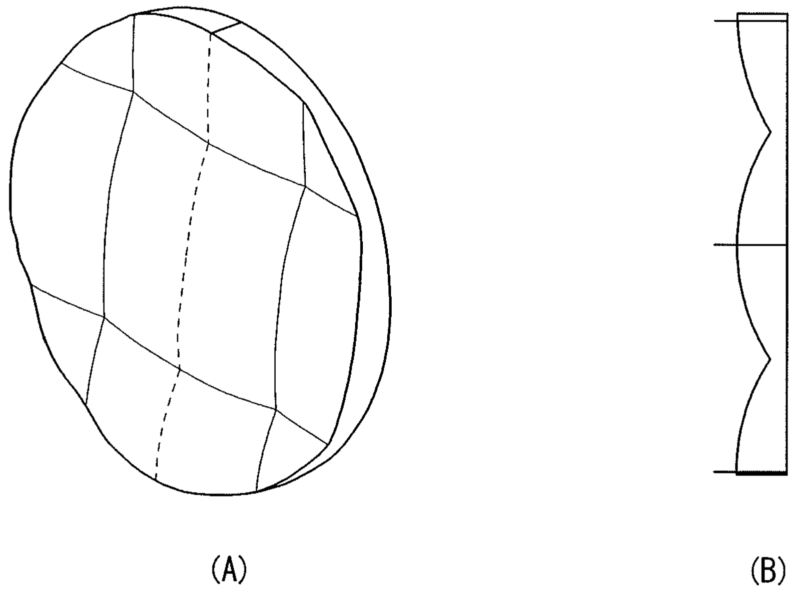


[ FIG. 12 ]

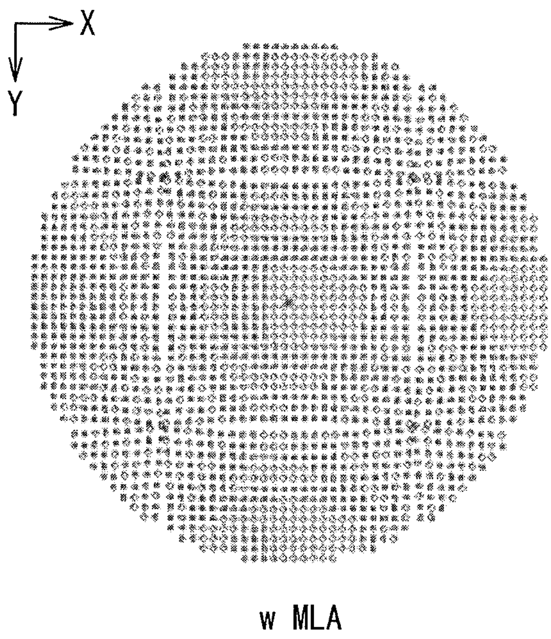

[ FIG. 13 ]

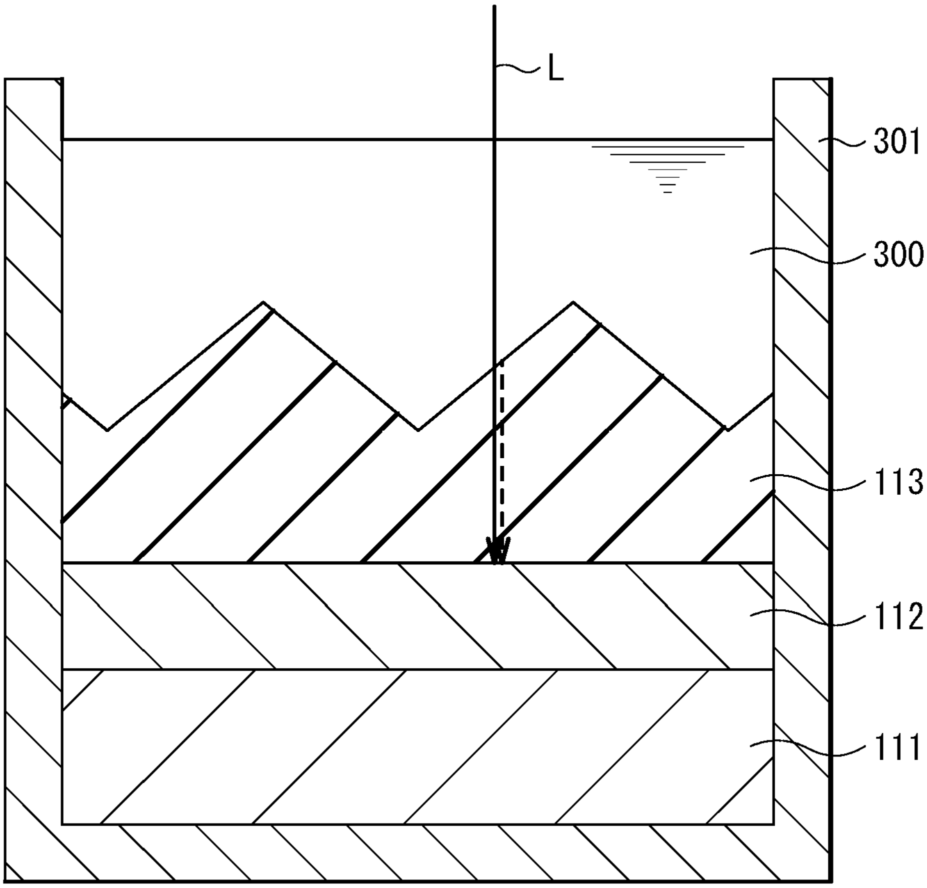

[ FIG. 14 ]

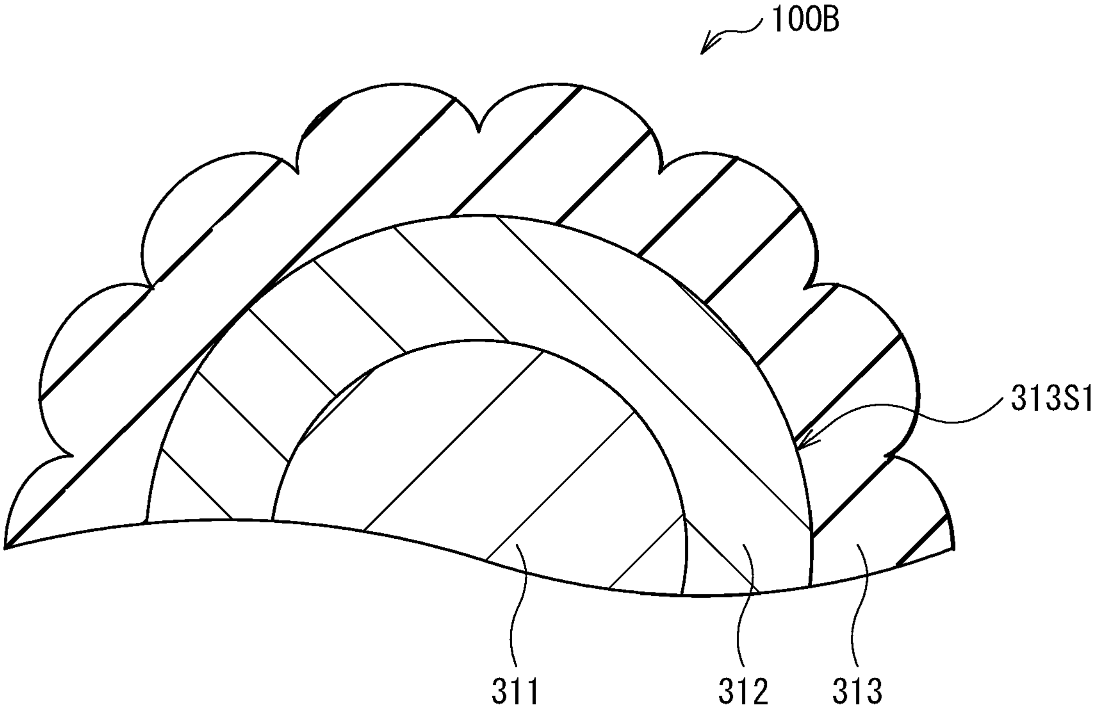


[ FIG. 15 ]

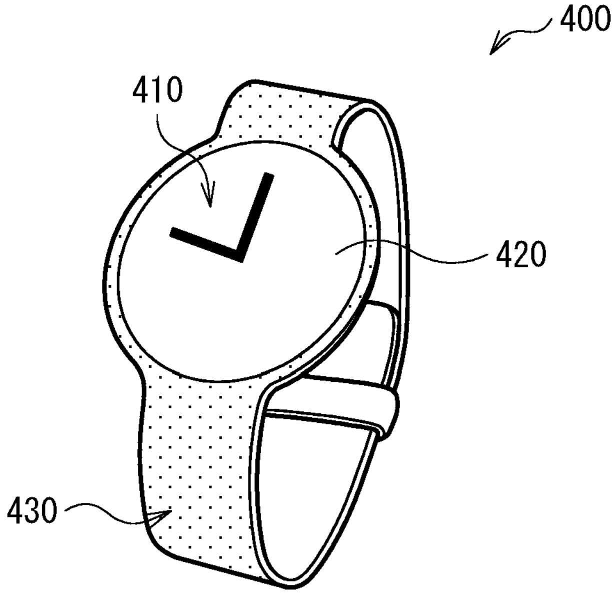

[ FIG. 16A ]

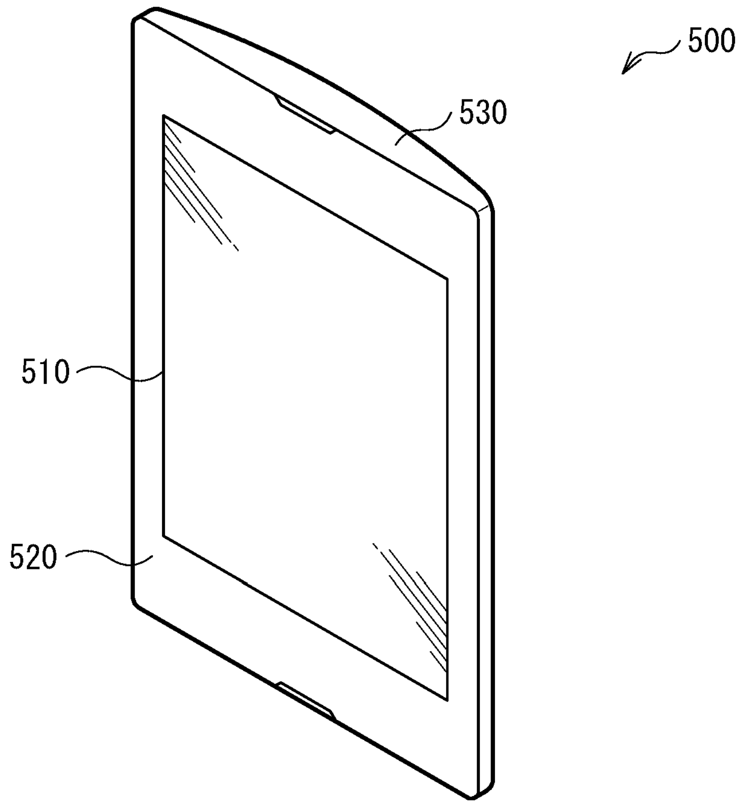


[ FIG. 16B ]

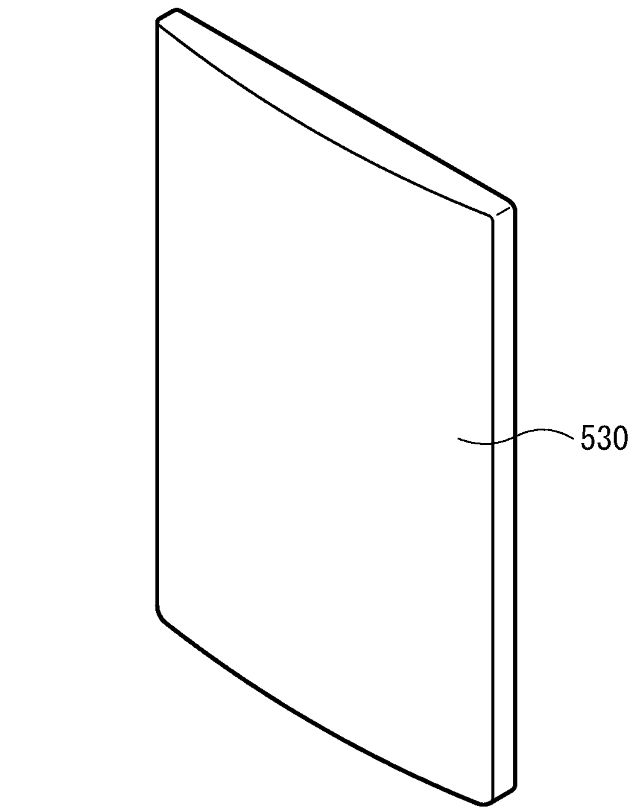

[ FIG. 17A ]

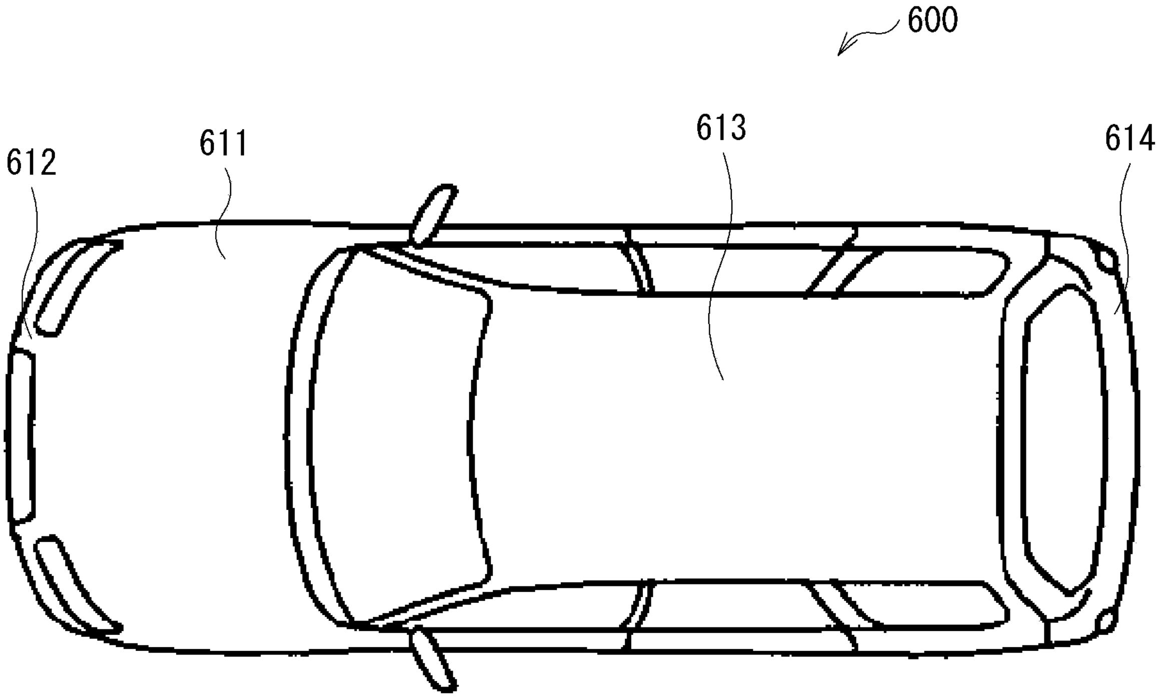


[ FIG. 17B ]

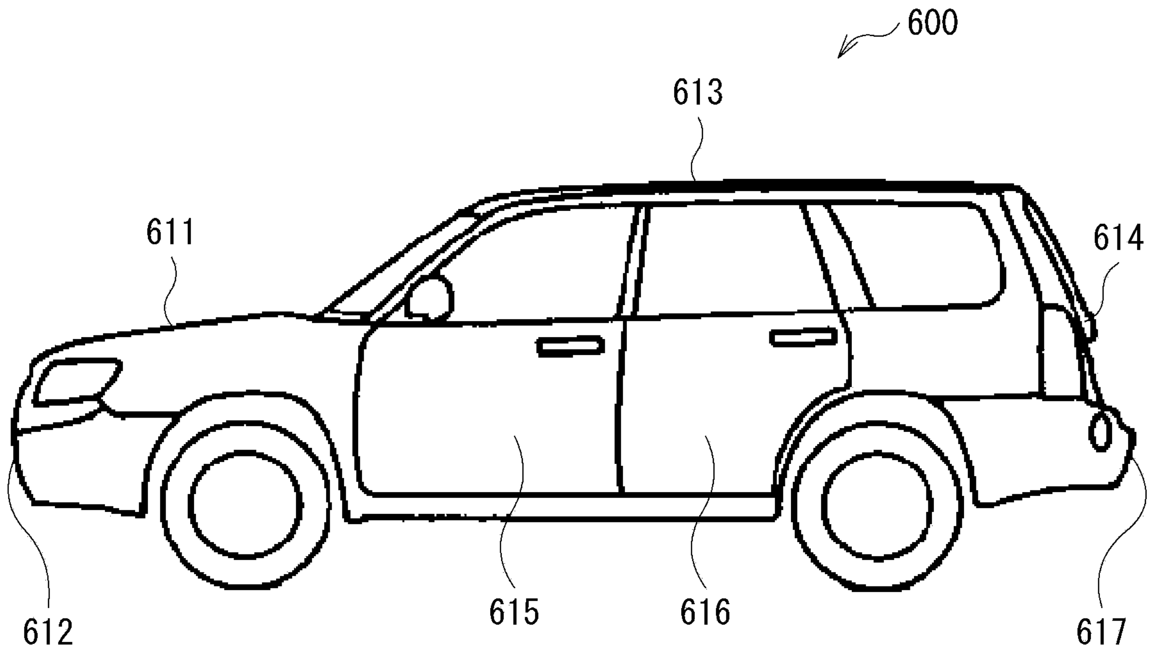

[ FIG. 18 ]

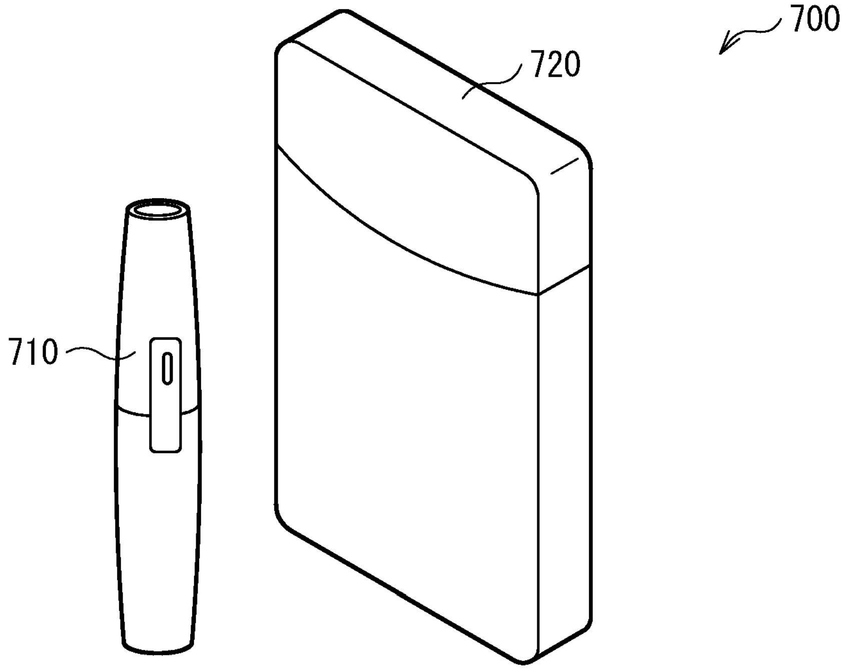


[ FIG. 19 ]

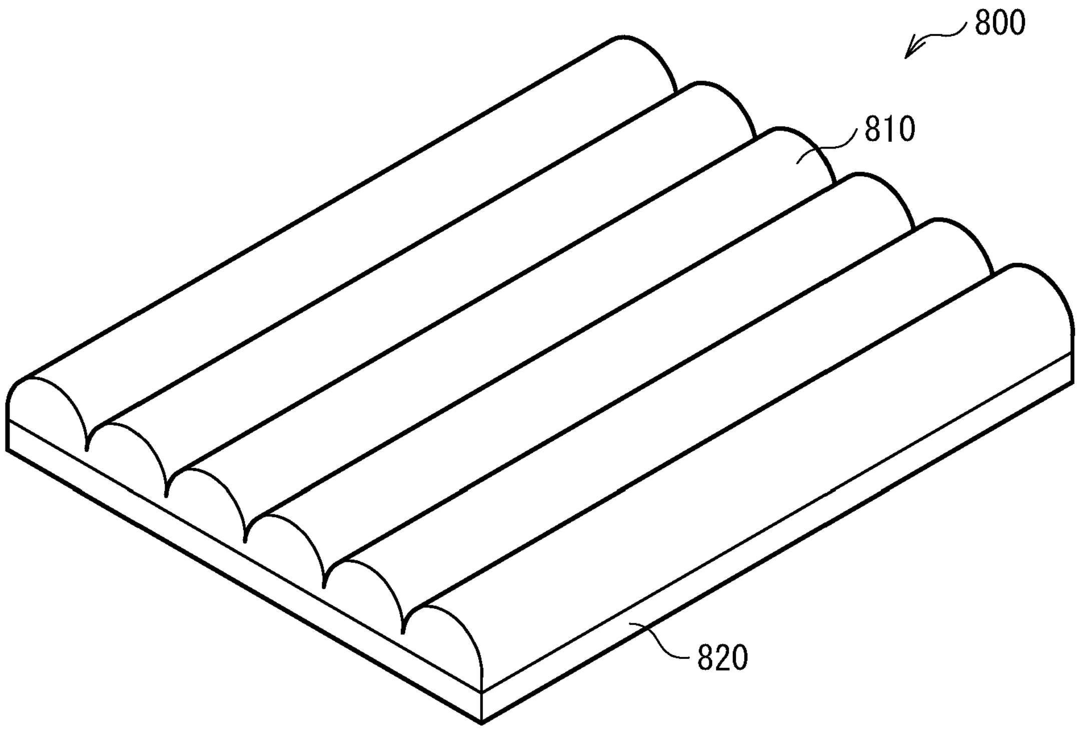

[ FIG. 20 ]

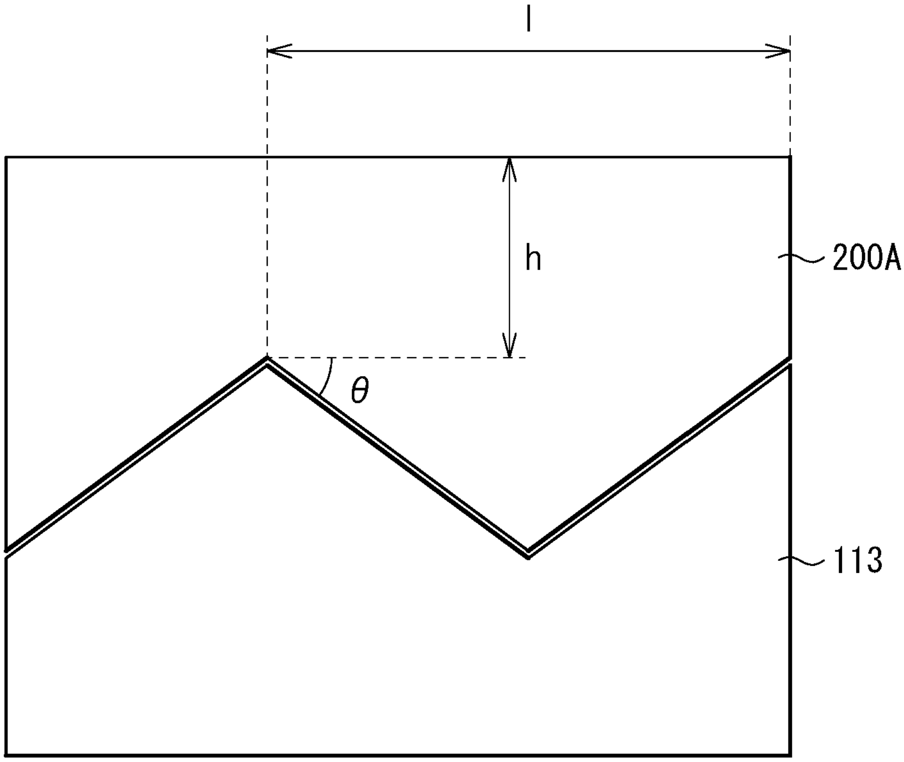

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004188827 A
- EP 3037274 A1
- JP 2018204199 A